# EUROPEAN PATENT APPLICATION

(11) **EP 4 730 101 A1**
(43) Date of publication of application: **22.04.2026**
(21) Application number: 24899628.2
(22) Date of filing: 21.11.2024
(51) Int. Cl.: G06F 3/14

(54) **LAYER SYNTHESIS METHOD AND ELECTRONIC DEVICE**

(30) Priority: 05.12.2023 CN 202311670669
(71) Applicant: Huawei Technologies Co., Ltd., Shenzhen, Guangdong 518129 (CN)
(72) Inventor: LIN, Haoye, Shenzhen, Guangdong 518129 (CN); SUN, Guofei, Shenzhen, Guangdong 518129 (CN); PENG, Zeyu, Shenzhen, Guangdong 518129 (CN); XU, Weichao, Shenzhen, Guangdong 518129 (CN); WU, Jiangzheng, Shenzhen, Guangdong 518129 (CN)
(74) Representative: Isarpatent
(86) International application number: PCT/CN2024/133513
(87) International publication number: WO 2025/118987

(57) **Abstract**

This application provides a layer synthesis method and an electronic device. In this application, foreground layers may be pre-synthesized, to effectively reduce a quantity of foreground layers participating in real-time synthesis. This improves real-time layer synthesis efficiency. The method includes: The electronic device obtains a background layer, an active layer, a first foreground layer, a second foreground layer, and a third foreground layer that are sequentially disposed. The electronic device synthesizes the first foreground layer, the second foreground layer, and the third foreground layer, to generate a first intermediate image. Then, the electronic device synthesizes the background layer, the active layer, and the first intermediate image, to generate a first target image.

## Description

### TECHNICAL FIELD

This application relates to the field of terminal technologies, and in particular, to a layer synthesis method and an electronic device.

### BACKGROUND

With development of terminal technologies, a multi-layer blending technology is widely used in painting or image processing scenes. For example, in a painting scene, after displaying a face contour, of a character, painted by a user on a layer 1 in response to a painting operation of the user, an electronic device creates a layer 2 in response to a layer creation operation of the user, and displays facial features painted by the user on the layer 2 in response to the painting operation of the user. Then, the electronic device may synthesize the layer 1 and the layer 2 according to the multi-layer blending technology, to display a final entire face image. For another example, in an image processing scene, after obtaining a plurality of pictures in response to a picture input operation of the user, the electronic device uses each picture as a layer, and synthesizes the plurality of layers according to the multi-layer blending technology, to display a finally synthesized image.

During layer synthesis, the electronic device applies for a texture used to store a blending result. Then, the electronic device synthesizes the plurality of layers into the texture from bottom to top, and an obtained result texture is the final synthesized image. However, in the painting or image processing scene, the electronic device needs to display image change effect corresponding to an operation of the user in real time for the user to confirm. Therefore, the electronic device needs to perform layer synthesis in real time. However, when there are a large quantity of layers, a computing amount required for layer blending is huge, and real-time layer synthesis causes frame freezing in display, which affects user experience.

### SUMMARY

To resolve the foregoing technical problems, this application provides a layer synthesis method and an electronic device. According to the technical solutions provided in this application, foreground layers are pre-synthesized, to effectively reduce a quantity of foreground layers participating in real-time synthesis. This improves real-time layer synthesis efficiency.

To achieve the foregoing technical objective, this application provides the following technical solutions.

According to a first aspect, a layer synthesis method is provided, and is applied to an electronic device. The method includes: obtaining a background layer, an active layer, a first foreground layer, a second foreground layer, and a third foreground layer that are sequentially disposed; synthesizing the first foreground layer, the second foreground layer, and the third foreground layer, to generate a first intermediate image; and synthesizing the background layer, the active layer, and the first intermediate image, to generate a first target image.

In this way, in a preprocessing phase, the electronic device pre-synthesizes the plurality of foreground layers, to effectively reduce a quantity of foreground layers participating in layer synthesis in a real-time processing phase, and improve real-time layer synthesis efficiency. This improves image processing efficiency, and avoids frame freezing and an abnormality that affect user experience.

According to the first aspect, before the synthesizing the first foreground layer, the second foreground layer, and the third foreground layer, to generate the first intermediate image, the method further includes: determining, based on a blend mode of the first foreground layer, the second foreground layer, and the third foreground layer, that the first foreground layer, the second foreground layer, and the third foreground layer meet an associative condition, where the associative condition indicates that a blending order of a plurality of adjacent layers is changeable.

For example, based on the associative condition, after a layer order of layers is changed, synthesis results of the layers are the same. In this case, these layers meet the associative condition. For example, blend algorithms of these layers are the same and meet the associative condition.

In this way, the electronic device pre-synthesizes foreground layers, in the foreground layers, that meet the associative condition, to reduce a quantity of foreground layers subsequently participating in real-time layer synthesis. This improves layer synthesis efficiency.

In some examples, a plurality of foreground layers included in a layer list may include a plurality of groups of adjacent foreground layers that meet the associative condition, so that a plurality of groups of intermediate images may be pre-synthesized. Optionally, the plurality of foreground layers may further include foreground layers that do not meet the associative condition. In this case, these foreground layers that do not meet the associative condition subsequently participate in real-time layer synthesis, to ensure final layer synthesis effect.

According to the first aspect or any implementation of the first aspect, the method further includes: in response to an operation of a user, interchanging the second foreground layer with the third foreground layer without changing the active layer; and synthesizing the first foreground layer, the third foreground layer, and the second foreground layer, to obtain a second intermediate image, where the second intermediate image is consistent with the first intermediate image based on the associative condition. In this way, even if the user interchanges the second foreground layer with the third foreground layer by operating the electronic device, the electronic device can still preprocess the foreground layer, to improve image processing efficiency and avoid frame freezing and an abnormality.

In some other examples, the electronic device may use the first intermediate image as the second intermediate image. In this way, after the user interchanges the second foreground layer with the third foreground layer, because the three foreground layers still meet the associative condition, the electronic device may not need to pre-synthesize the first foreground layer, the third foreground layer, and the second foreground layer, but use the previously obtained first intermediate image as the second intermediate image, to reduce synthesis overheads.

According to the first aspect or any implementation of the first aspect, the associative condition specifically indicates: synthesizing the second foreground layer and the third foreground layer, to obtain a first transition image; and synthesizing the first transition image and the first foreground layer, to obtain a second transition image; and synthesizing the first foreground layer and the second foreground layer, to obtain a third transition image; and synthesizing the third transition image and the third foreground layer, to obtain a fourth transition image, where the second transition image is consistent with the fourth transition image.

In some examples, from a perspective of content of the image, content of the second transition image may be consistent with content of the first intermediate image, and content of the fourth transition image may be consistent with content of the second intermediate image. In this way, whether layers meet the associative condition is determined by determining whether a layer synthesis result changes after a layer order of the layers is changed.

According to the first aspect or any implementation of the first aspect, the generating the first target image includes: determining, based on a blend mode of the first intermediate image and the active layer, that the first intermediate image and the active layer do not meet a commutative condition, and maintaining a layer order of the background layer, the active layer, and the first intermediate image, where the commutative condition indicates that adjacent layers are interchangeable; and synthesizing the background layer, the active layer, and the first intermediate image, to generate a first target image.

According to the first aspect or any implementation of the first aspect, the generating the first target image includes: determining, based on a blend mode of the first intermediate image and the active layer, that the first intermediate image and the active layer meet a commutative condition, where the commutative condition indicates that adjacent layers are interchangeable; synthesizing the first intermediate image and the background layer, to generate the second intermediate image; and synthesizing the second intermediate image and the active layer, to generate the first target image.

For example, based on the commutative condition, after the active layer and the first intermediate image are interchanged, a final layer synthesis result is not affected. For example, blend algorithms of the active layer and the first intermediate image meet the commutative condition.

According to the first aspect or any implementation of the first aspect, the commutative condition specifically indicates: sequentially synthesizing the background layer, the active layer, and the first intermediate image from bottom to top, to obtain a fifth transition image; and sequentially synthesizing the background layer, the first intermediate image, and the active layer from bottom to top, to obtain a sixth transition image, where the fifth transition image is consistent with the sixth transition image.

In this way, when determining that the foreground layer adjacent to the active layer and the active layer meet the commutative condition, the electronic device may interchange the adjacent foreground layer with the active layer, so that the foreground layer is changed into a background layer and participates in pre-synthesis. This effectively reduces a quantity of foreground layers that subsequently participate in real-time layer synthesis. Optionally, the foreground layers that meet the commutative condition may be one layer, or may be a layer obtained through pre-synthesis.

According to a second aspect, a layer synthesis method is provided, and is applied to an electronic device. The method includes: obtaining a background layer set, an active layer, and a first foreground layer that are sequentially disposed; synthesizing the first foreground layer and the background layer set, to generate a first intermediate image; and synthesizing the active layer and the first intermediate image, to generate a first target image.

In this way, in a preprocessing phase, the electronic device interchanges the foreground layer with the active layer, so that the foreground layer is changed into a background layer and participates in pre-synthesis with another background layer. This effectively reduces a quantity of foreground layers that subsequently participate in real-time layer synthesis, to improve real-time layer synthesis efficiency.

According to the second aspect, the background layer set includes a first background layer and a second background layer that are sequentially disposed.

In some examples, the background layer set may include a single layer obtained by synthesizing the first background layer and the second background layer.

In this way, the electronic device may interchange the foreground layer with the active layer, and then pre-synthesize the background layers; or the electronic device may pre-synthesize the background layers, and then interchange the foreground layer with the active layer. Therefore, a layer preprocessing process is flexibly implemented.

According to the second aspect or any implementation of the second aspect, before the synthesizing the first foreground layer and the background layer set, to generate the first intermediate image, the method further includes: determining, based on a blend mode of the first foreground layer and the active layer, that the first foreground layer and the active layer meet a commutative condition, where the commutative condition indicates that adjacent layers are interchangeable.

For example, based on the commutative condition, after the active layer and the first foreground layer are interchanged, a final layer synthesis result is not affected. For example, blend algorithms of the active layer and the first foreground layer meet the commutative condition.

According to the second aspect or any implementation of the second aspect, the commutative condition specifically indicates: sequentially synthesizing the first background layer, the second background layer, the active layer, and the first foreground layer from bottom to top, to obtain a first transition image; and sequentially synthesizing the first background layer, the second background layer, the first foreground layer, and the active layer from bottom to top, to obtain a second transition image, where the first transition image is consistent with the second transition image.

According to the second aspect or any implementation of the second aspect, the first foreground layer is a compound layer, and the compound layer includes a mask layer and a foreground layer that are associated.

In this way, the compound layer in the foreground layer and the active layer may be interchanged, to effectively reduce a quantity of layers that participate in real-time layer synthesis.

According to the second aspect or any implementation of the second aspect, the method further includes: determining that a pixel parameter of the active layer changes, and resynthesizing the active layer whose pixel parameter changes and the first intermediate image, to generate a second target image.

In this way, layers participating in real-time layer synthesis include only the active layer and the first intermediate image, to effectively improve layer synthesis efficiency.

According to a third aspect, a layer synthesis method is provided, and is applied to an electronic device. The method includes: obtaining a first background layer, a second background layer, a third background layer, an active layer, and a first foreground layer that are sequentially disposed; synthesizing the first background layer, the second background layer, and the third background layer, to generate a first intermediate image; synthesizing the first foreground layer and the first intermediate image, to generate a second intermediate image; and synthesizing the active layer and the second intermediate image, to generate a first target image.

In this way, in a preprocessing phase, the electronic device pre-synthesizes the plurality of background layers. In addition, the electronic device interchanges the foreground layer with the active layer, so that the foreground layer is changed into a background layer and participates in pre-synthesis with another background layer. This effectively reduces a quantity of foreground layers that subsequently participate in real-time layer synthesis, to improve real-time layer synthesis efficiency.

According to the third aspect, before the synthesizing the first foreground layer and the first intermediate image, to generate the second intermediate image, the method further includes: determining, based on a blend mode of the first foreground layer and the active layer, that the first foreground layer and the active layer meet a commutative condition, where the commutative condition indicates that adjacent layers are interchangeable.

For example, based on the commutative condition, after the active layer and the first foreground layer are interchanged, a final layer synthesis result is not affected. For example, blend algorithms of the active layer and the first foreground layer meet the commutative condition.

According to the third aspect or any implementation of the third aspect, the commutative condition specifically indicates: sequentially synthesizing the first intermediate image, the active layer, and the first foreground layer from bottom to top, to obtain a first transition image; and sequentially synthesizing the first intermediate image, the first foreground layer, and the active layer from bottom to top, to obtain a second transition image, where the first transition image is consistent with the second transition image.

According to the third aspect or any implementation of the third aspect, before the synthesizing the first background layer, the second background layer, and the third background layer, to generate the first intermediate image, the method further includes: determining, based on a blend mode of the first background layer, the second background layer, and the third background layer, that the first background layer, the second background layer, and the third background layer meet an associative condition, where the associative condition indicates that a blending order of a plurality of adjacent layers is changeable.

According to the third aspect or any implementation of the third aspect, the associative condition specifically indicates: synthesizing the first background layer and the second background layer, to obtain a third transition image; and synthesizing the third transition image and the third background layer, to obtain a fourth transition image; and synthesizing the second background layer and the third background layer, to obtain a fifth transition image; and synthesizing the fifth transition image and the first background layer, to obtain a sixth transition image, where the fourth transition image is consistent with the sixth transition image.

For example, based on the associative condition, after a layer order of layers is changed, synthesis results of the layers are the same. In this case, these layers meet the associative condition. For example, blend algorithms of these layers are the same and meet the associative condition.

According to a fourth aspect, an electronic device is provided. The electronic device includes a processor and a memory. The memory is coupled to the processor. The memory is configured to store computer program code, and the computer program code includes computer instructions. When the processor reads the computer instructions from the memory, the electronic device is configured to: obtain a background layer, an active layer, a first foreground layer, a second foreground layer, and a third foreground layer that are sequentially disposed; synthesize the first foreground layer, the second foreground layer, and the third foreground layer, to generate a first intermediate image; and synthesize the background layer, the active layer, and the first intermediate image, to generate a first target image.

According to the fourth aspect, when the processor reads the computer instructions from the memory, the electronic device is further configured to: determine, based on a blend mode of the first foreground layer, the second foreground layer, and the third foreground layer, that the first foreground layer, the second foreground layer, and the third foreground layer meet an associative condition, where the associative condition indicates that a blending order of a plurality of adjacent layers is changeable.

According to the fourth aspect or any implementation of the fourth aspect, the associative condition specifically indicates: synthesizing the second foreground layer and the third foreground layer, to obtain a first transition image; and synthesizing the first transition image and the first foreground layer, to obtain a second transition image; and synthesizing the first foreground layer and the second foreground layer, to obtain a third transition image; and synthesizing the third transition image and the third foreground layer, to obtain a fourth transition image, where the second transition image is consistent with the fourth transition image.

According to the fourth aspect or any implementation of the fourth aspect, the generating the first target image includes: determining, based on a blend mode of the first intermediate image and the active layer, that the first intermediate image and the active layer do not meet a commutative condition, and maintaining a layer order of the background layer, the active layer, and the first intermediate image, where the commutative condition indicates that adjacent layers are interchangeable; and synthesizing the background layer, the active layer, and the first intermediate image, to generate the first target image.

According to the fourth aspect or any implementation of the fourth aspect, the generating the first target image includes: determining, based on a blend mode of the first intermediate image and the active layer, that the first intermediate image and the active layer meet a commutative condition, where the commutative condition indicates that adjacent layers are interchangeable; synthesizing the first intermediate image and the background layer, to generate a second intermediate image; and synthesizing the second intermediate image and the active layer, to generate the first target image.

According to the fourth aspect or any implementation of the fourth aspect, the commutative condition specifically indicates: sequentially synthesizing the background layer, the active layer, and the first intermediate image from bottom to top, to obtain a fifth transition image; and sequentially synthesizing the background layer, the first intermediate image, and the active layer from bottom to top, to obtain a sixth transition image, where the fifth transition image is consistent with the sixth transition image.

According to a fifth aspect, an electronic device is provided. The electronic device includes a processor and a memory. The memory is coupled to the processor. The memory is configured to store computer program code, and the computer program code includes computer instructions. When the processor reads the computer instructions from the memory, the electronic device is configured to: obtain a background layer set, an active layer, and a first foreground layer that are sequentially disposed; synthesize the first foreground layer and the background layer set, to generate a first intermediate image; and synthesize the active layer and the first intermediate image, to generate a first target image.

According to the fifth aspect, the background layer set includes a first background layer and a second background layer that are sequentially disposed; or the background layer set may include a single layer obtained by synthesizing a first background layer and a second background layer.

According to the fifth aspect or any implementation of the fifth aspect, when the processor reads the computer instructions from the memory, the electronic device is further configured to: determine, based on a blend mode of the first foreground layer and the active layer, that the first foreground layer and the active layer meet a commutative condition, where the commutative condition indicates that adjacent layers are interchangeable.

According to the fifth aspect or any implementation of the fifth aspect, the commutative condition specifically indicates: sequentially synthesizing the first background layer, the second background layer, the active layer, and the first foreground layer from bottom to top, to obtain a first transition image; and sequentially synthesizing the first background layer, the second background layer, the first foreground layer, and the active layer from bottom to top, to obtain a second transition image, where the first transition image is consistent with the second transition image.

According to the fifth aspect or any implementation of the fifth aspect, the first foreground layer is a compound layer, and the compound layer includes a mask layer and a foreground layer that are associated.

According to the fifth aspect or any implementation of the fifth aspect, when the processor reads the computer instructions from the memory, the electronic device is further configured to: determine that a pixel parameter of the active layer changes, and resynthesize the active layer whose pixel parameter changes and the first intermediate image, to generate a second target image.

According to a sixth aspect, an electronic device is provided. The electronic device includes a processor and a memory. The memory is coupled to the processor. The memory is configured to store computer program code, and the computer program code includes computer instructions. When the processor reads the computer instructions from the memory, the electronic device is configured to: obtain a first background layer, a second background layer, a third background layer, an active layer, and a first foreground layer that are sequentially disposed; synthesize the first background layer, the second background layer, and the third background layer, to generate a first intermediate image; synthesize the first foreground layer and the first intermediate image, to generate a second intermediate image; and synthesize the active layer and the second intermediate image, to generate a first target image.

According to the sixth aspect, when the processor reads the computer instructions from the memory, the electronic device is further configured to: determine, based on a blend mode of the first foreground layer and the active layer, that the first foreground layer and the active layer meet a commutative condition, where the commutative condition indicates that adjacent layers are interchangeable.

According to the sixth aspect or any implementation of the sixth aspect, the commutative condition specifically indicates: sequentially synthesizing the first intermediate image, the active layer, and the first foreground layer from bottom to top, to obtain a first transition image; and sequentially synthesizing the first intermediate image, the first foreground layer, and the active layer from bottom to top, to obtain a second transition image, where the first transition image is consistent with the second transition image.

According to the sixth aspect or any implementation of the sixth aspect, when the processor reads the computer instructions from the memory, the electronic device is further configured to: determine, based on a blend mode of the first background layer, the second background layer, and the third background layer, that the first background layer, the second background layer, and the third background layer meet an associative condition, where the associative condition indicates that a blending order of a plurality of adjacent layers is changeable.

According to the sixth aspect or any implementation of the sixth aspect, the associative condition specifically indicates: synthesizing the first background layer and the second background layer, to obtain a third transition image; and synthesizing the third transition image and the third background layer, to obtain a fourth transition image; and synthesizing the second background layer and the third background layer, to obtain a fifth transition image; and synthesizing the fifth transition image and the first background layer, to obtain a sixth transition image, where the fourth transition image is consistent with the sixth transition image.

According to a seventh aspect, an electronic device is provided. The electronic device has a function of implementing the layer synthesis method in the first aspect and any possible implementation of the first aspect; or the electronic device has a function of implementing the layer synthesis method in the second aspect and any possible implementation of the second aspect; or the electronic device has a function of implementing the layer synthesis method in the third aspect and any possible implementation of the third aspect. The function may be implemented by hardware, or may be implemented by hardware executing corresponding software. The hardware or the software includes one or more modules corresponding to the function.

According to an eighth aspect, a computer-readable storage medium is provided. The computer-readable storage medium stores a computer program (which may also be referred to as instructions or code). When the computer program is executed by an electronic device, the electronic device is enabled to perform the method in the first aspect or any implementation of the first aspect, or the method in the second aspect or any implementation of the second aspect, or the method in the third aspect or any implementation of the third aspect.

According to a ninth aspect, a computer program product is provided. When the computer program product runs on an electronic device, the electronic device is enabled to perform the method in the first aspect or any implementation of the first aspect, or the method in the second aspect or any implementation of the second aspect, or the method in the third aspect or any implementation of the third aspect.

According to a tenth aspect, a circuit system is provided. The circuit system includes a processing circuit, and the processing circuit is configured to perform the method in the first aspect or any implementation of the first aspect, or the method in the second aspect or any implementation of the second aspect, or the method in the third aspect or any implementation of the third aspect.

According to an eleventh aspect, a chip system is provided, including at least one processor and at least one interface circuit. The at least one interface circuit is configured to: perform a transceiver function, and send instructions to the at least one processor. When the at least one processor executes the instructions, the at least one processor performs the method in the first aspect or any implementation of the first aspect, or the method in the second aspect or any implementation of the second aspect, or the method in the third aspect or any implementation of the third aspect.

For technical effect of the foregoing aspects, refer to each other. Details are not described herein again.

### BRIEF DESCRIPTION OF DRAWINGS

FIG. 1(a) to FIG. 1(e) are a diagram of layer display interfaces according to an embodiment of this application;
FIG. 2 is a diagram of layer blending according to an embodiment of this application;
FIG. 3 is a diagram of background layer pre-synthesis according to an embodiment of this application;
FIG. 4 is a diagram of a hardware structure of an electronic device according to an embodiment of this application;
FIG. 5 is a block diagram of a software structure of an electronic device according to an embodiment of this application;
FIG. 6 is a schematic flowchart 1 of a layer synthesis method according to an embodiment of this application;
FIG. 7 is a schematic flowchart 2 of a layer synthesis method according to an embodiment of this application;
FIG. 8 is a diagram of a compound layer pre-synthesis scene according to an embodiment of this application;
FIG. 9 is a diagram of a commutative condition according to an embodiment of this application;
FIG. 10 is a diagram of a scene in which layers are interchanged based on a commutative condition according to an embodiment of this application;
FIG. 11 is a diagram of an associative condition according to an embodiment of this application;
FIG. 12 is a diagram of a scene in which a group of foreground layers is pre-synthesized based on an associative condition according to an embodiment of this application;
FIG. 13 is a diagram of a background layer pre-synthesis scene according to an embodiment of this application;
FIG. 14 is a diagram 1 of a layer synthesis scene according to an embodiment of this application;
FIG. 15 is a diagram 2 of a layer synthesis scene according to an embodiment of this application;
FIG. 16 is a diagram 3 of a layer synthesis scene according to an embodiment of this application;
FIG. 17 is a diagram 4 of a layer synthesis scene according to an embodiment of this application; and
FIG. 18 is a diagram of a structure of an electronic device according to an embodiment of this application.

### DESCRIPTION OF EMBODIMENTS

The following describes technical solutions in embodiments of this application with reference to accompanying drawings in embodiments of this application. In the descriptions of embodiments of this application, terms used in the following embodiments are merely intended to describe purposes of specific embodiments, but are not intended to limit this application. The terms "one", "a", "the", "the foregoing", "this", and "the one" of singular forms used in this specification and the appended claims of this application are intended to include expressions such as "one or more", unless otherwise specified in the context clearly. It should be further understood that, in the following embodiments of this application, "at least one" and "one or more" mean one or more (including two).

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", "contain", and their variants all mean "include but are not limited to", unless otherwise specifically emphasized in another manner. The term "connection" includes direct connection and indirect connection, unless otherwise specified. The terms "first" and "second" are intended only for description, and shall not be understood as an indication or implication of relative importance or an implicit indication of a quantity of indicated technical features.

In embodiments of this application, words such as "example" or "for example" indicate giving an example, an illustration, or a description. Any embodiment or design scheme described as an "example" or "for example" in embodiments of this application should not be construed as being more preferred or more advantageous than another embodiment or design scheme. Exactly, use of the word "example", "for example", or the like is intended to present a related concept in a specific manner.

First, technical terms in embodiments of this application are described.
(1) Pixel (Pixel): The pixel is a basic unit of image display, and cannot be further segmented. Each pixel is in a small square with a single color.
(2) Texture (Texture): The texture is a data object including image information. For example, the data object may be an array including pixels, data of each pixel indicates a color of the pixel, and the array including pixels may indicate an entire image. For example, the texture may be a memory storing a layer or an image.
(3) Layer (Image Layer): In an image processing application or a painting application, a layer is a component of work (or described as an image). The work may include a plurality of layers, and each layer includes different visual elements. The layers may be stacked and blended to achieve final effect. Each layer may be separately modified without affecting content of other layers.
(4) Blend (Blend): A plurality of layers are used as inputs, to output one result image.
(5) Synthesize (synthesize): A plurality of layers are used as inputs, to output one result image.
(6) Blend algorithm (Blend Algorithm): The blend algorithm is a computing method of layer blending, and textures of two layers are usually used as inputs, to output one texture as a blending result.
(7) Blend mode (Blend Mode): The blend mode indicates a manner of layer blending, each blend mode corresponds to a blend algorithm, and an output result of layer blending depends on the blend mode. A set of universal blend modes is defined in the art industry. For example, the blend modes include a normal (Normal) mode, a multiply (Multiply) mode, a linear burn mode, and a screen mode.

The normal mode is a default mode in the blend modes, and indicates that pixels of layers with blend colors are displayed without layer blending, which means that a base layer (background layer) has no impact on the layers with blend colors. The multiply mode indicates that grayscales of pixel colors of a top layer and a bottom layer are multiplied, to obtain a color with a lower grayscale, and the color is a synthesized color. In other words, layer synthesis effect is that pixels with low grayscales are displayed, and pixels with high grayscales are not displayed. The linear burn mode indicates that colors of base layers are darkened by decreasing brightness, to reflect blend colors. The screen mode is opposite to the multiply mode, and indicates that grayscales of pixel colors of a top layer and a bottom layer are multiplied, to obtain a color with a higher grayscale, and the color is a synthesized color. In other words, layer synthesis effect is that pixels with high grayscales are displayed, and pixels with low grayscales are not displayed.

In some examples, an electronic device is pre-configured with different blend modes and blend algorithms for implementing the blend modes. The electronic device detects an operation of setting a blend mode for a layer by a user, and determines a blend mode and a blend algorithm for the layer.
(8) Mask (Mask): The mask is a special layer that acts on another layer to produce special effect.
(9) Compound layer (Compound Layer): The compound layer is a special layer group that usually includes a layer and a mask, and is used to implement specific combination effect.
(10) Layer list (Layer List): Layers in work are arranged from bottom to top.
(11) Active layer (Active Layer): The active layer is a layer that is being modified by the user.
(12) Background layer (Background Layer): The background layer is a layer located beneath the active layer in the layer list.
(13) Foreground layer (Foreground Layer): The foreground layer is a layer located above the active layer in the layer list.
(14) Painting latency (Painting Latency): The painting latency is a latency of displaying a stroke on a screen when a pen paints on the screen.
(15) Commutative condition: For a blend algorithm f(A, B), if a first input and a second input of the blend algorithm are interchanged, and an obtained result remains unchanged, that is, f(A, B) = f(B, A), the blend algorithm meets the commutative condition.
(16) Associative condition: For the blend algorithm f(A, B), when the blend algorithm appears on two consecutive layers, if a calculation order of the blend algorithm is changed, and an obtained result remains unchanged, that is, f(f(A, B), C) = f(A, f(B, C)), the blend algorithm meets the associative condition.

In some embodiments, a multi-layer blending technology is widely used in painting or image processing scenes. For example, in a painting scene, after displaying a face contour, of a character, painted by the user on a layer 1 in response to a painting operation of the user, the electronic device creates a layer 2 in response to a layer creation operation of the user, and displays eyes, of the character, painted by the user on the layer 2 in response to a painting operation of the user. Then, the electronic device repeats the foregoing steps to create, based on operations of the user, more layers used to paint other content such as facial features and hair of the character. Then, the electronic device may synthesize the plurality of created layers by using the multi-layer blending technology, to display a final entire face image. For another example, in an image processing scene, after obtaining a plurality of pictures in response to a picture input operation of the user, the electronic device uses each picture as a layer, and synthesizes the plurality of layers by using the multi-layer blending technology, to display a finally synthesized image.

During layer synthesis, the electronic device applies for a texture used to store a blending result. Then, the electronic device synthesizes the plurality of layers into the texture from bottom to top, and an obtained result texture is the final synthesized image.

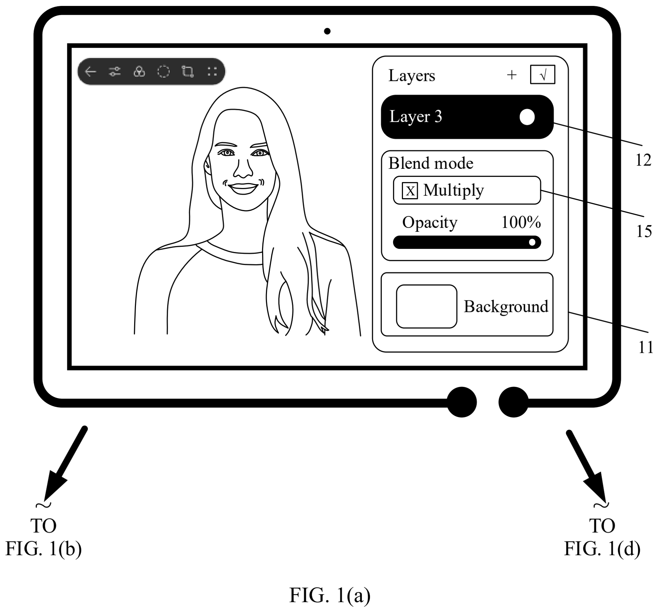

For example, as shown in FIG. 1(a), in a painting scene, the electronic device displays a menu bar 11. The menu bar 11 may be used to display layer information corresponding to a currently painted image. The image includes at least one layer, and the electronic device manages the at least one layer by using a layer management module. In some examples, one layer corresponds to one structure, the structure includes a plurality of member variables, and each member variable corresponds to one type of layer information. For example, as shown in FIG. 1(a), the currently painted image includes four layers, and a layer list managed by the layer management module includes layer information of the four layers. A layer that is being edited by the user is a layer 3. As shown in the menu bar 11, member variables corresponding to the layer 3 include a layer name, a blend mode, and the like. In other words, layer information includes the layer name, the blend mode, and the like.

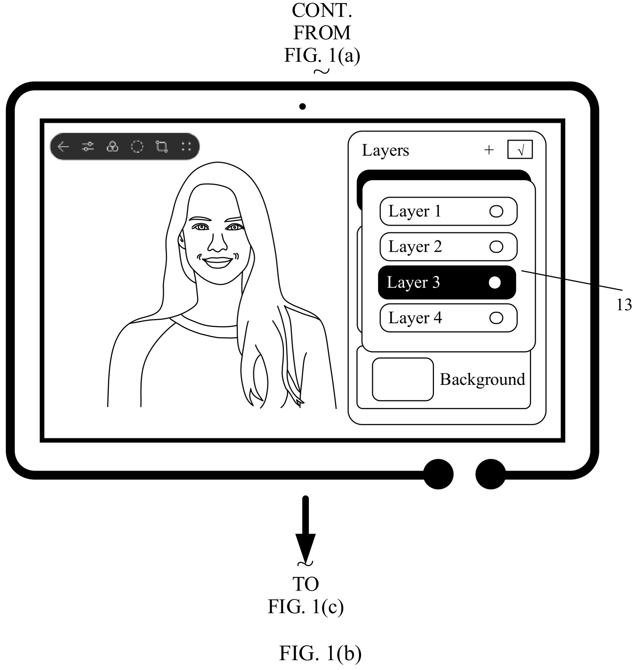

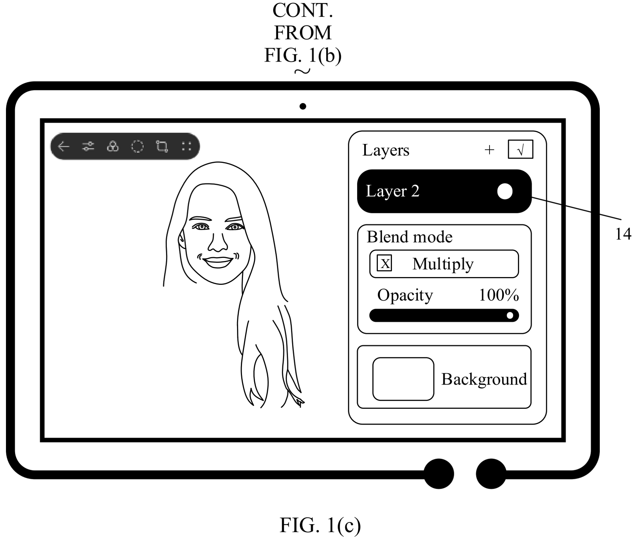

In some examples, the electronic device may determine an active layer based on an operation of the user. The active layer is a layer on which the user performs the operation. For example, as shown in FIG. 1(a), the current layer 3 is an active layer, and the layer information corresponding to the layer 3 includes information indicating that the layer 3 is the active layer. The electronic device may perform layer switching based on the operation of the user, to determine a new active layer. For example, the electronic device detects an operation performed by the user on a layer option 12, and displays an interface shown in FIG. 1(b). As shown by a reference numeral 13, the electronic device displays a plurality of layers included in a currently painted image, and the user may indicate, based on a requirement, the electronic device to switch to a layer that needs to be edited for display. Then, as shown by a reference numeral 14 in FIG. 1(c), the electronic device switches, based on a selection operation of the user, to a layer 2 for display, sets layer information of the layer 2 to include information indicating that the layer 2 is an active layer, and modifies the layer information of the layer 3. The modified layer information includes information indicating that the layer 3 is a background layer.

It should be understood that the electronic device may alternatively obtain the active layer in another manner. For example, after starting a painting application (or another application like an image processing application), the electronic device sets a top layer as an active layer, and displays the active layer; or sets, as an active layer, a layer last edited after the painting application is closed last time, and displays the active layer. Alternatively, the electronic device may determine the active layer in another manner.

In some examples, a layer that is being edited by the user is an active layer (or described as a focus layer), a layer beneath the layer is a background layer, and a layer above the layer is a foreground layer. When the active layer is a top layer, there is no foreground layer. When the active layer is a bottom layer, there is no background layer.

For example, in the scene shown in FIG. 1(b), a layer list includes four layers corresponding to a currently displayed image. The electronic device may add or delete a layer, or change a layer order of the layers based on an operation of the user. In response to an operation of selecting a layer 3 by the user, the electronic device determines that the current layer 3 is an active layer, a layer 4 is a background layer, and a layer 1 and a layer 2 are foreground layers.

In some examples, the user may set a blend mode for each layer, and each blend mode corresponds to one blend algorithm. The blend algorithm of the layer is used to define a computing method for blending the layer into a texture. In some examples, the blend mode includes a normal mode and a multiply mode.

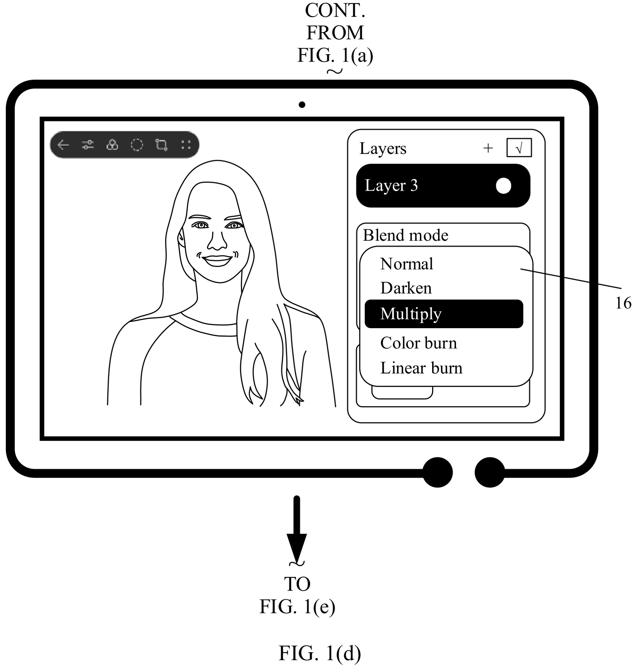

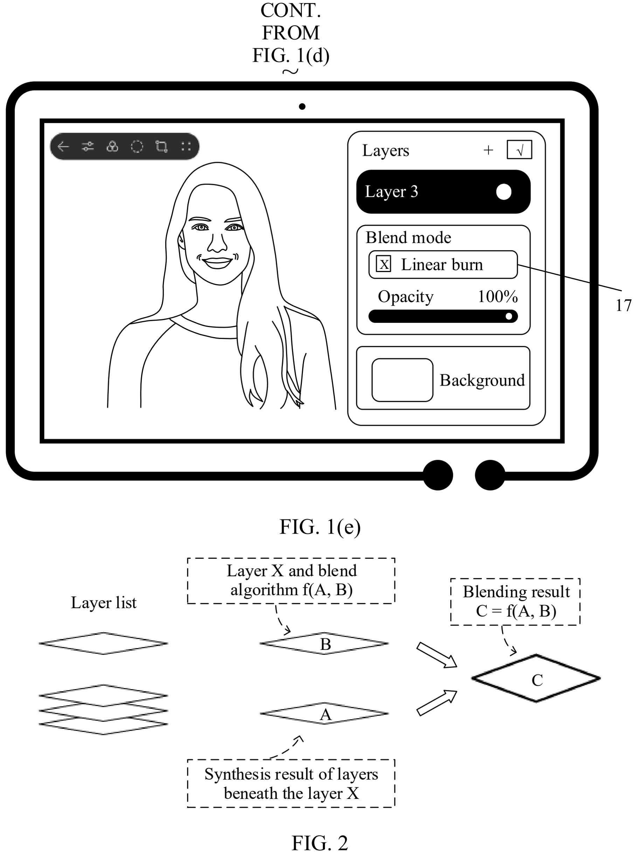

For example, as shown in FIG. 1(a), a blend mode of the current layer 3 is the multiply mode. In response to an operation of the user on a blend mode option 15, the electronic device determines that the user indicates to set the blend mode of the layer 3, and the electronic device may display an interface shown in FIG. 1(d). As shown in a reference numeral 16, the user may select, based on a requirement, a blend mode set for the layer 3. For example, as shown by a reference numeral 17 shown in FIG. 1(e), the electronic device sets a blend mode of the layer 3 to a linear burn mode based on an operation of the user.

In some examples, as shown in FIG. 2, a blend algorithm f(A, B) corresponding to a blend mode of a layer X is a binary operation. A first input of the blend algorithm is a synthesis result of layers beneath the layer X, a second input is the layer X, and an output C = f(A, B) of the blend algorithm is a blending result of the layer X and the layers beneath the layer X.

However, in the painting or image processing scene, the user usually processes one layer in the image, and the electronic device needs to display image change effect corresponding to an operation in real time for the user to confirm. Therefore, the electronic device needs to perform layer synthesis in real time. However, when there are a large quantity of layers, a computing amount required for layer blending is huge, and real-time layer synthesis causes a painting latency, a display response is poor, frame freezing occurs, and painting or image processing efficiency is low.

In some embodiments, the electronic device pre-synthesizes some layers in a layer pre-synthesis manner. In this way, in a real-time layer synthesis process, a quantity of layers to be synthesized can be reduced, to improve synthesis efficiency and avoid frame freezing.

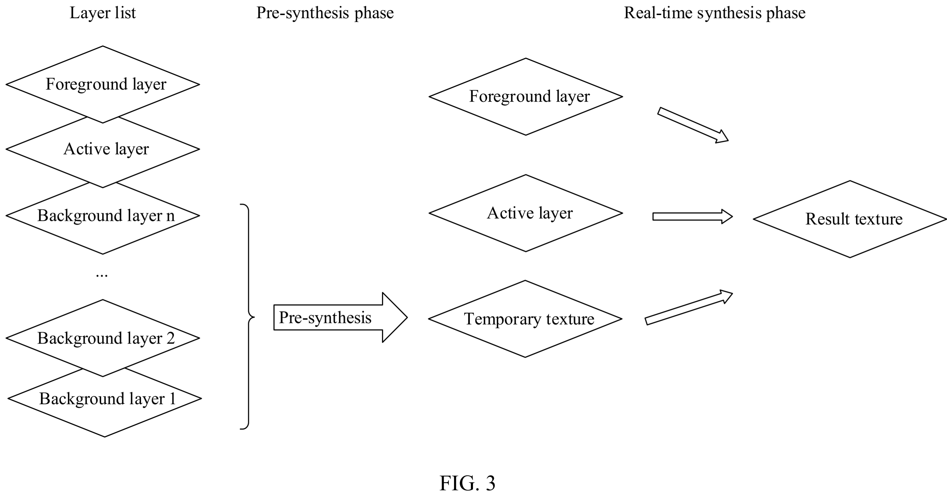

In some examples, in a painting or image processing process, the user usually operates only content at an active layer, and does not change content at a background layer. As shown in FIG. 3, after determining the active layer, the electronic device may perform a preprocessing phase, that is, apply for a temporary texture, and then synthesize all background layers into the temporary texture. Then, in a real-time layer synthesis phase, the electronic device directly synthesizes the active layer into the temporary texture based on a change of the content at the active layer, to obtain a result texture through synthesis; and then sequentially synthesizes one or more foreground layers into the result texture from bottom to top, to obtain a final synthesis result. In the pre-synthesis process, synthesis of the background layers does not change the order of layer synthesis from bottom to top, to ensure accuracy of the synthesis result. In addition, a quantity of layers participating in real-time synthesis is reduced, and real-time layer synthesis performance is improved.

However, in a scene in which there are a large quantity of foreground layers, the foregoing solution has limited improvements on layer synthesis efficiency, and frame freezing and an abnormality still exist, which affects user experience.

In some embodiments, a layer synthesis method provided in embodiments of this application may be applied to an electronic device 100. In some example, the electronic device 100 may be a terminal device with a display function, for example, a mobile phone, a tablet computer, a notebook computer, a smart screen, a wearable device, a vehicle-mounted terminal, an ultra-mobile personal computer (ultra-mobile personal computer, UMPC), a netbook, a personal digital assistant (personal digital assistant, PDA), or an artificial intelligence (artificial intelligence, AI) device. An operating system installed on the electronic device 100 includes but is not limited to iOS^{®}, Android^{®}, HarmonyOS^{®}, Windows^{®}, Linux^{®}, or another operating system. A specific type of the electronic device 100 and the operating system installed in the electronic device 100 are not limited in this application.

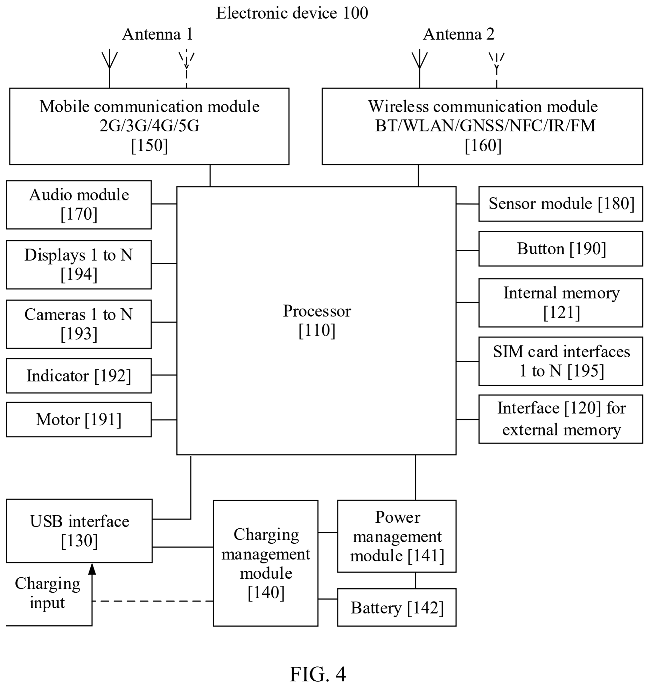

FIG. 4 is a diagram of a structure of the electronic device 100.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identity module (subscriber identification module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural network processing unit (neural-network processing unit, NPU), and/or the like. Different processing units may be independent components, or may be integrated into one or more processors.

The controller may generate an operation control signal based on instruction operation code and a timing signal, to complete control of instruction fetching and instruction execution.

The memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor, a charger, a flash, the camera 193, and the like by using different I2C bus interfaces. For example, the processor 110 may be coupled to the touch sensor through the I2C interface, so that the processor 110 communicates with the touch sensor through the I2C bus interface, to implement a touch function of the electronic device 100.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI interface, to implement a display function of the electronic device 100.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device like an AR device.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution, applied to the electronic device 100, to wireless communication including 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device, or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite-based augmentation system (satellite-based augmentation systems, SBAS).

The electronic device 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be made of a liquid crystal display (liquid crystal display, LCD), for example, an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, or a quantum dot light-emitting diode (quantum dot light-emitting diode, QLED). In some embodiments, the electronic device 100 may include one or N displays 194, where N is a positive integer greater than 1.

In some embodiments, in a process of displaying an image by using the display 194, the electronic device 100 detects an editing operation performed by the user on the image, determines, by using the processor 110, a layer at which the user currently edits image content, and determines the layer as an active layer. Then, the electronic device 100 may perform a layer preprocessing phase on a foreground layer and/or a background layer by using the processor 110, to effectively reduce a quantity of layers participating in real-time synthesis. Then, the electronic device 100 displays a final real-time layer synthesis result on the display 194, so that the user determines editing effect.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The interface 120 for external memory may be used to connect to an external storage card, for example, a micro SD card, to extend a storage capability of the electronic device 100. The external memory card communicates with the processor 110 through the interface 120 for external memory, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110. The electronic device 100 may perform music playing, recording, or the like by using the audio module 170. The audio module 170 may include a speaker, a receiver, a microphone, a headset jack, an application processor, and the like, to implement an audio function.

The sensor module 180 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. The motor 191 may also correspond to different vibration feedback effect for touch operations performed on different areas of the display 194. Different application scenarios (for example, a time reminder, information receiving, an alarm clock, and a game) may also correspond to different vibration feedback effect.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1.

A software system of the electronic device 100 may use a layered architecture, an event-driven architecture, a microkemel architecture, a micro service architecture, or a cloud architecture. In this embodiment of this application, an Android system with a layered architecture is used as an example to describe a software structure of the electronic device 100.

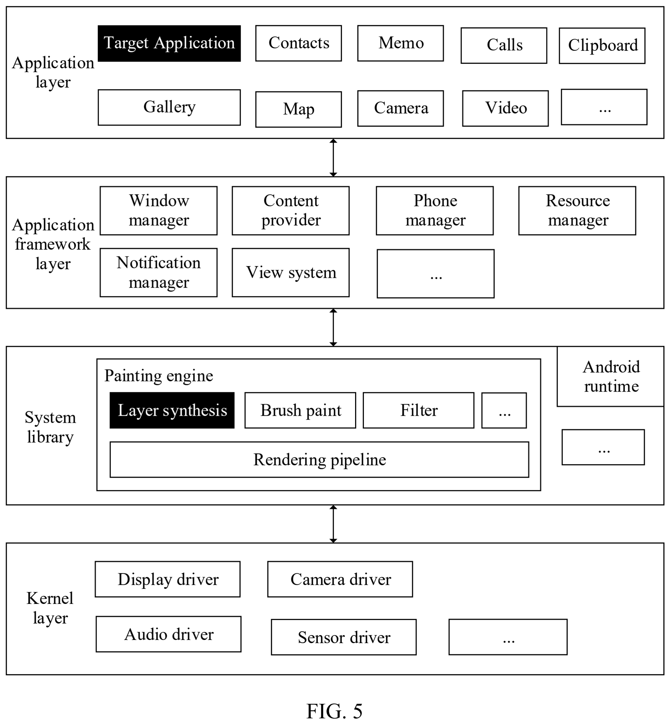

FIG. 5 is a block diagram of a software structure of the electronic device 100 according to an embodiment of this application.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 5, the application package may include applications such as Target Application, Contacts, Memo, Calls, Clipboard, Gallery, Map, Camera, and Video.

In some examples, Target Application is an image processing application, a painting application, or another application that has functions such as image display and processing. In some examples, Target Application is configured with function logic such as a user interface, work management, layer management, a brush, and a filter.

The application framework layer provides an application programming interface (application programming interface, API) and a programming framework for an application at the application layer. The application framework layer includes some predefined functions.

As shown in FIG. 5, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying a picture. The view system may be configured to construct an application. A display interface may include one or more views. For example, a display interface including a short message notification icon may include a text display view and a picture display view.

The phone manager is configured to provide a communication function of the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification type message. The notification information may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a core library and a virtual machine. The Android runtime is responsible for scheduling and management of the Android system.

The kernel library includes two parts: a function that needs to be called in the Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a painting engine. The system library may include a plurality of other functional modules, for example, a surface manager (surface manager), a media library (Media Libraries), a three-dimensional graphics processing library (for example, OpenGL ES), and a two-dimensional graphics engine (for example, SGL).

In some embodiments, the painting engine is configured to implement a painting or image processing function of Target Application. The painting engine includes, for example, modules such as a layer synthesis module, a brush painting module, a filter module, and a rendering pipeline module. The modules can assemble and configure rendering pipelines based on logic of the modules. The rendering pipeline module is configured to generate a rendering instruction. For example, the layer synthesis module is configured to perform a preprocessing process and a real-time layer synthesis process on layers. In the preprocessing process, the layer synthesis module performs preprocessing, for example, adjusts a layer order of layers and pre-synthesizes some layers. Then, in the real-time layer synthesis process, the layer synthesis module synthesizes the preprocessed layers (or textures). In addition, before layer synthesis, the layer synthesis module triggers the rendering pipeline module to generate the rendering instruction, to instruct the electronic device 100 to synthesize rendered layers.

The surface manager is configured to manage a display subsystem and provide fusion of 2D and 3D layers for a plurality of application programs.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics painting, image rendering, synthesis, layer processing, and the like.

The two-dimensional graphics engine is a painting engine for 2D painting. In some examples, the painting engine includes the three-dimensional graphics processing library and the two-dimensional graphics engine.

The kernel layer is a layer between hardware and software. The kernel layer includes at least a display driver, a camera driver, an audio driver, and a sensor driver.

In some examples, the kernel layer and the system library include an interface, for example, a rendering hardware interface, used by the GPU to invoke GPU storage and computing functions. In some examples, the rendering hardware interface includes a direct extension (direct extension, DX) 12 interface, a metal interface, a vulkan interface, and an OpenGL interface.

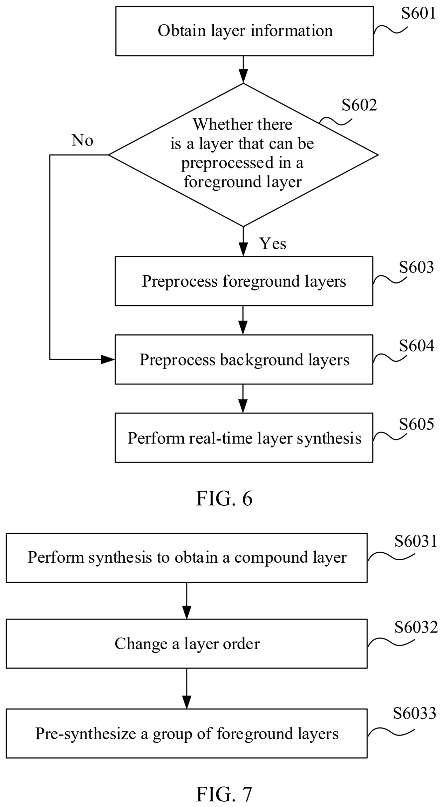

FIG. 6 is a schematic flowchart of a layer synthesis method according to an embodiment of this application. It should be noted that the method is not limited to a specific sequence described in FIG. 6 and below. It should be understood that in another embodiment, a sequence of some steps in the method may be exchanged according to an actual requirement, or some steps in the method may be omitted or deleted. The method includes the following steps.

S601: An electronic device obtains layer information.

In some embodiments, the electronic device starts a target application in response to an operation of a user, and displays an interface of the target application. On the interface of the target application, the electronic device determines, based on an operation of the user, a layer indicated by the user to perform an operation, and determines the layer as an active layer. In this case, the electronic device may obtain, based on a location relationship between the active layer and other layers in a layer list, layer information including layer information of a foreground layer located above the active layer, layer information of the active layer, and layer information of a background layer located beneath the active layer.

For example, the target application is a painting application. The electronic device displays an image A in the target application, and a layer list of the image A includes three layers from top to bottom: a layer 1, a layer 2, and a layer 3. The electronic device detects an operation of tapping the layer 2 in the layer list by the user, and determines that the user indicates to edit content at the layer 2. In this case, the electronic device may determine that the layer information includes the layer 2 being an active layer, the layer 1 being a foreground layer, and the layer 3 being a background layer. Alternatively, the electronic device detects, in a process of displaying an editing interface corresponding to the layer 3, an operation of adding a layer by the user, adds a layer 4 beneath the layer 3, and displays an editing interface of the layer 4. In addition, the electronic device may determine that the layer information includes the layer 4 being an active layer and the layer 1, the layer 2, and the layer 3 being foreground layers. In a scene of editing the layer 4, the layer information may not include a background layer.

For another example, the target application is an image processing application. The electronic device receives a picture 1, a picture 2, and a picture 3 that are input by the user, and creates a layer 1 used to edit the picture 1, a layer 2 used to edit the picture 2, and a layer 3 used to edit the picture 3. The electronic device detects an operation of editing the picture 2 by the user, and may determine that the layer information includes information that the layer 2 is an active layer, the layer 1 above the layer 2 is a foreground layer, and the layer 3 beneath the layer 2 is a background layer.

S602: The electronic device determines that there is a layer that can be preprocessed in the foreground layer.

When there is a layer that can be preprocessed in the foreground layer, step S603 is performed. When there is no layer that can be preprocessed in the foreground layer, step S604 is performed.

In some embodiments, the electronic device may preprocess the foreground layer and/or the background layer, to reduce a quantity of layers synthesized in real time.

In some examples, the electronic device may reduce, through preprocessing, a quantity of layers that are in foreground layers and that participate in subsequent real-time synthesis, to effectively improve real-time layer synthesis efficiency. Therefore, when determining that there is a layer that can be preprocessed in the foreground layer, the electronic device may perform step S603 to preprocess the foreground layer. Alternatively, when determining that there is no layer that can be preprocessed in the foreground layer, the electronic device may perform step S604 to preprocess background layers. Preprocessing the background layers is pre-synthesizing the background layers.

For example, the electronic device determines that the layer meets any one of a compound layer combination condition, a commutative condition, and an associative condition, and may determine that there is a layer that can be preprocessed.

A compound layer includes a mask layer and a common layer that are associated. For example, after obtaining the foreground layer, the electronic device determines that adjacent foreground layers can be combined into a compound layer. In this case, the electronic device may pre-synthesize the foreground layers into the compound layer, to reduce a quantity of foreground layers that participate in subsequent real-time layer synthesis. It should be understood that a quantity of foreground layers that form the compound layer is not limited.

The commutative condition indicates that adjacent layers are interchangeable. For example, the electronic device obtains a background layer, an active layer, and a first foreground layer that are sequentially disposed. The electronic device sequentially synthesizes the background layer, the active layer, and the first foreground layer from bottom to top, to obtain a first transition image; and sequentially synthesizes the background layer, the first foreground layer, and the active layer from bottom to top, to obtain a second transition image. If the first transition image is consistent with the second transition image, the electronic device may determine that the first foreground layer and the active layer meet the commutative condition. In some examples, the electronic device preprocesses the first foreground layer and the active layer that meet the commutative condition, for example, interchanges the first foreground layer with the active layer, in other words, changes the first foreground layer into a background layer, to reduce a quantity of foreground layers that participate in subsequent real-time synthesis and improve layer synthesis efficiency.

The associative condition indicates that a blending order of a plurality of adjacent layers is changeable. For example, the electronic device obtains a first foreground layer, a second foreground layer, and a third foreground layer that are sequentially disposed. The electronic device synthesizes the second foreground layer and the third foreground layer, to obtain a first transition image; and synthesizes the first transition image and the first foreground layer, to obtain a second transition image. The electronic device synthesizes the first foreground layer and the second foreground layer, to obtain a third transition image; and synthesizes the third transition image and the third foreground layer, to obtain a fourth transition image. If the second transition image is consistent with the fourth transition image, the electronic device may determine that the first foreground layer, the second foreground layer, and the third foreground layer meet the associative condition. In some examples, the electronic device preprocesses the first foreground layer, the second foreground layer, and the third foreground layer that meet the associative condition, to generate an intermediate image. In this way, in a subsequent real-time layer synthesis process, a quantity of foreground layers participating in real-time synthesis is effectively reduced, and layer synthesis efficiency is improved.

In some examples, the electronic device identifies whether there is a layer in the layers that meets the compound layer combination condition, the commutative condition, and the associative condition, to determine whether there is a layer that can be preprocessed. For details about the compound layer combination condition, the commutative condition, and the associative condition, refer to the following related descriptions.

In some examples, the electronic device may reduce, through preprocessing, a quantity of layers that are in background layers and that participate in subsequent real-time synthesis, to effectively improve real-time layer synthesis efficiency. Therefore, the electronic device may pre-synthesize the background layers. Synthesis of the background layers does not change the order of layer synthesis from bottom to top, to ensure accuracy of a synthesis result.

It should be understood that, in some scenes, an execution sequence of step S602 to step S604 is not limited in embodiments of this application. For example, preprocessing performed by the electronic device on the foreground layers includes pre-synthesizing some foreground layers, and pre-synthesis of the foreground layers does not affect pre-synthesis of the background layers. In this case, the electronic device may first perform step S604, and then perform step S602 and step S603; or the electronic device simultaneously performs step S604, step S602, and step S603. In some other scenes, preprocessing performed by the electronic device on the foreground layers includes adjusting the layer order of the layers, that is, changing the foreground layer into a background layer. In this case, the electronic device needs to sequentially perform step S602, step S603, and step S604. For details about the preprocessing manner in which the electronic device adjusts the layer order of the layers, refer to step S603. Details are not described herein.

S603: The electronic device preprocesses the foreground layers.

In some embodiments, preprocessing performed by the electronic device on the foreground layers includes one or more of synthesis for obtaining a compound layer, layer interchange, and pre-synthesis of a group of foreground layers.

For example, as shown in FIG. 7, step S603 includes step S6031 to step S6033, and a plurality of preprocessing manners of the foreground layers are described by using step S6031 to step S6033.

S6031: The electronic device synthesizes the foreground layers, to obtain a compound layer.

The compound layer is a special layer group that usually includes a layer and a mask, and is used to implement specific combination effect. In some examples, when determining that the foreground layers include foreground layers that can be combined into a compound layer, the electronic device may first pre-synthesize the foreground layers, to generate the compound layer. The compound layer may be stored in the electronic device in a form of a temporary texture, to reduce a quantity of foreground layers, and further reduce a quantity of layers participating in real-time layer synthesis. In some examples, a compound layer group includes at least one layer and at least one mask. For example, the compound layer may include one foreground layer and one mask layer.

Combination effect of the compound layer is implemented by blending the layer and the mask that are included in the compound layer. Therefore, pre-synthesis for obtaining the compound layer does not affect a final result of subsequent layer synthesis.

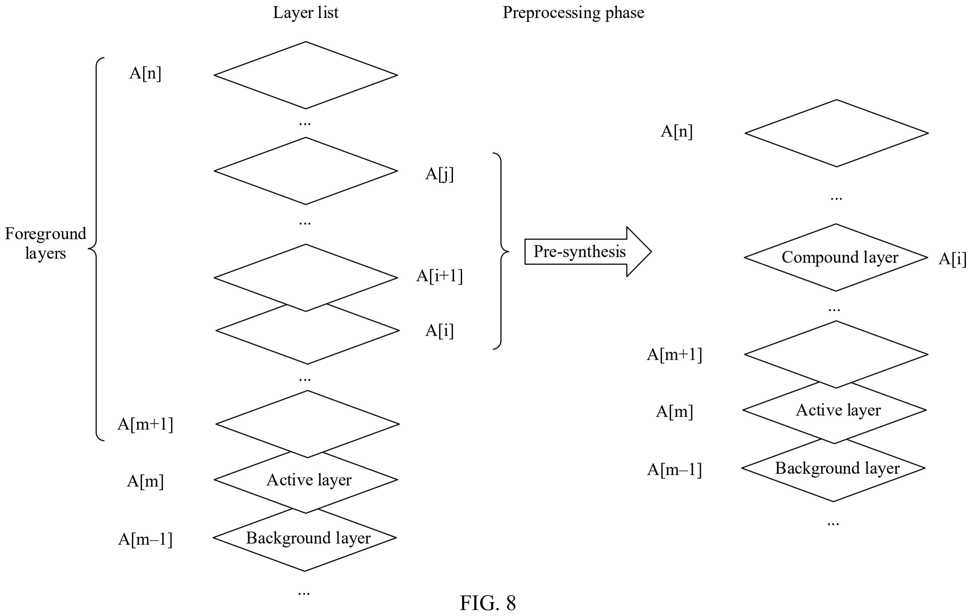

For example, as shown in FIG. 8, the electronic device obtains a layer list, determines an active layer A[m] in response to an operation of the user, and determines, based on a layer location relationship in the layer list, foreground layers A[m+1] to A[n] located above the active layer. Then, the electronic device traverses the foreground layers A[m+1] to A[n]. If the electronic device determines that an i^{th} layer to a j^{th} layer form a compound layer, the electronic device pre-synthesizes A[i] to A[j], to generate the compound layer. Then, the electronic device continues to traverse the foreground layers, and skips A[i+1] to A[j] in a process of traversing the foreground layers. The electronic device repeats the foregoing steps until synthesis for obtaining all compound layers included in the foreground layers is completed, where m, i, and j are positive integers.

In some examples, after synthesizing the foreground layers A[i] to A[j] to obtain the compound layer, the electronic device may determine a layer order of the compound layer as a layer order closest to the active layer in the synthesized foreground layers. For example, as shown in FIG. 8, after the electronic device pre-synthesizes the foreground layers A[i] to A[j], the compound layer A[i] is obtained.

In some examples, the electronic device obtains the compound layer by pre-synthesizing the foreground layers, and the compound layer may also be described as an intermediate image generated in a layer synthesis process.

In some examples, the electronic device may also traverse the background layers in a process of pre-synthesis for obtaining the compound layer, to obtain the compound layer included in the background layers.

In this way, the electronic device obtains the compound layer through pre-synthesis, to effectively reduce a quantity of the foreground layers. Therefore, in a subsequent process of real-time layer synthesis, a quantity of layers participating in real-time synthesis is reduced, layer synthesis efficiency is improved, a painting latency is reduced, and user experience is improved.

S6032: The electronic device changes a layer order of the foreground layers.

In some embodiments, if the foreground layer and the active layer can be interchanged, the foreground layer can be changed into a background layer, to reduce a quantity of foreground layers that subsequently participate in real-time synthesis.

In some examples, for a blend algorithm f(A, B) of a layer, if a first input and a second input of the blend algorithm are interchanged, and an obtained result remains unchanged, that is, f(A, B) = f(B, A), the blend algorithm meets the commutative condition.

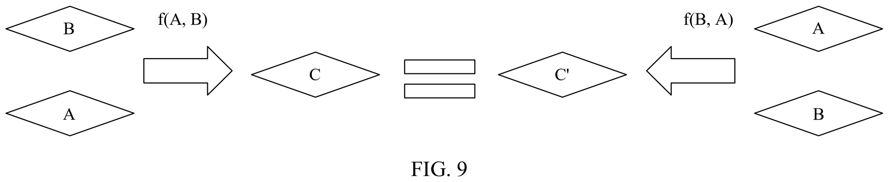

For example, as shown in FIG. 9, a layer list includes a layer A and a layer B. The layer B is located above the layer A, a blend algorithm of the layer B is f, and a blending result of the layer A and the layer B is a layer C = f(A, B). If the electronic device interchanges the layer A with the layer B, and sets the layer A above the layer B, a blending result of the layer B and the layer A is C' = f(B, A). If C' is the same as C, the electronic device may determine that the blend algorithm f(A, B) meets the commutative condition. In other words, even if the electronic device interchanges the layer A with the layer B, a final layer synthesis result is not affected.

For example, Table 1 shows some blend modes, in common blend modes, that meet the commutative condition and corresponding blend algorithms. It should be understood that the blend algorithm, of the blend mode, that meets the commutative condition is not limited to content shown in Table 1.

**Table 1**

| Blend mode | Blend algorithm |
|---|---|
| Multiply mode | A * B |
| Linear burn mode | A + B - 1 |
| Screen mode | 1 - (1 - A) * (1 - B) |

In some embodiments, after determining the active layer, the electronic device may obtain a foreground layer adjacent to the active layer in the foreground layers, and determine whether blend algorithms of the foreground layer and the active layer meet the commutative condition. If the blend algorithms meet the commutative condition, the electronic device may interchange the layer with the active layer, to change the foreground layer into a background layer adjacent to the active layer.

The electronic device repeats the foregoing steps until it is determined that a blend algorithm of a foreground layer adjacent to the active layer does not meet the commutative condition, and stops changing a layer order of the foreground layer. In this case, the electronic device has changed, into background layers, a plurality of consecutive layers that are above the active layer and whose blend algorithms meet the commutative condition.

In some examples, if blend algorithms of the active layer and an adjacent foreground layer do not meet the commutative condition, the electronic device may not perform layer interchanging on the foreground layer. In other words, the electronic device does not need to determine whether the blend algorithm of the layer adjacent to the active layer meets the commutative condition.

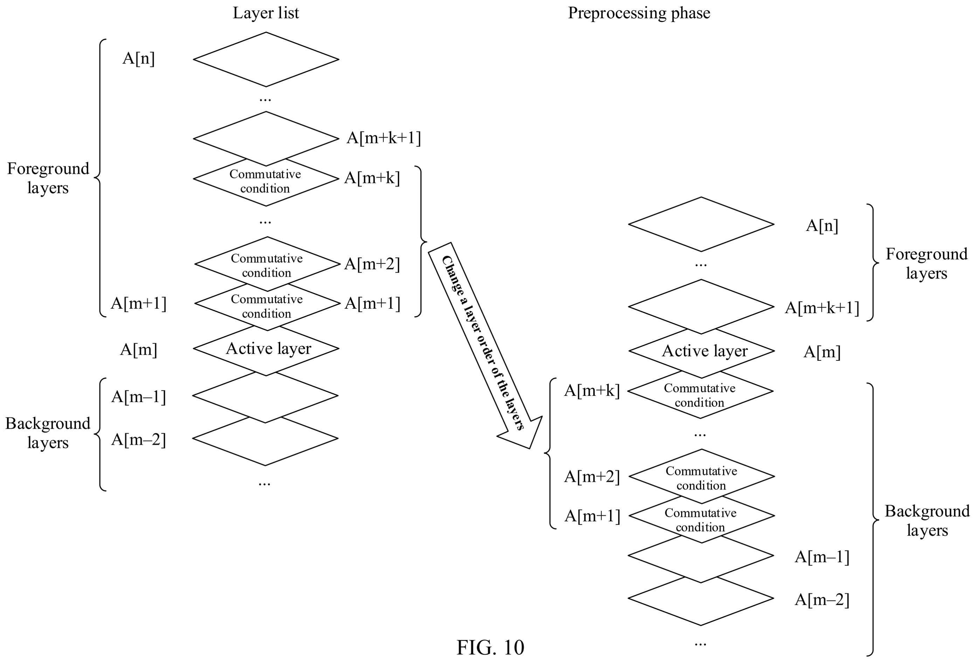

For example, as shown in FIG. 10, the electronic device obtains a layer list, and determines an active layer A[m] in response to an operation of the user. In this case, the electronic device may obtain, based on a layer relationship of layers in the layer list, that a blend algorithm of the active layer and blend algorithms of k consecutive foreground layers A[m+1] to A[m+k] that are adjacent to the active layer and that are located above the active layer meet the commutative condition, where k is an integer. In this case, the electronic device may move the k consecutive foreground layers A[m+1] to A[m+k] beneath the active layer A[m].

In some examples, as shown in FIG. 10, a blend algorithm of a foreground layer A[m+k+1] and the blend algorithm of the active layer do not meet the commutative condition. Therefore, the electronic device does not change the foreground layer A[m+k+1] and a foreground layer located above the foreground layer A[m+k+1] into background layers.

Because the blend algorithms of the active layer and the active layer that participates in interchanging meet the commutative condition, interchanging of the foreground layer and the active layer does not affect a final layer synthesis result. Therefore, the electronic device may interchange adjacent layers whose blend algorithms meet the commutative condition. In some examples, after layers whose blend algorithms meet the commutative condition are interchanged, a layer synthesis result is not affected. Therefore, after the electronic device moves the k consecutive foreground layers A[m+1] to A[m+k] beneath the active layer A[m], a synthesis result of the layers A[m+1] to A[m+k] and the active layer A[m] is not affected.

In some examples, after the electronic device moves the k consecutive foreground layers A[m+1] to A[m+k] beneath the active layer A[m], a layer order of the layers A[m+1] to A[m+k] is not limited.

In some examples, after the electronic device moves the k consecutive foreground layers A[m+1] to A[m+k] beneath the active layer A[m], if a layer in the new background layers A[m+1] to A[m+k] is adjacent to an original background layer, the electronic device may further determine whether blend algorithms of the new background layer and the original background layer that are adjacent meet the commutative condition. If the commutative condition is met, the electronic device may also interchange the adjacent new background layer with the original background layer. Then, the electronic device may repeat the foregoing steps to complete changing of a layer order of all layers, in background layers, whose blend algorithms meet the commutative condition.

In this way, the electronic device changes a layer order of the foreground layers, to effectively reduce a quantity of the foreground layers. Therefore, in a subsequent process of real-time layer synthesis, a quantity of layers participating in real-time synthesis is reduced, layer synthesis efficiency is improved, a painting latency is reduced, and display response performance is optimized, to improve user experience.

S6033: The electronic device pre-synthesizes a group of foreground layers.

In some embodiments, if some layers in the foreground layers may be pre-synthesized, a quantity of foreground layers that subsequently participate in real-time synthesis can be reduced. The electronic device may pre-synthesize a group of foreground layers that meet the associative condition, so that a final layer synthesis result is not affected.

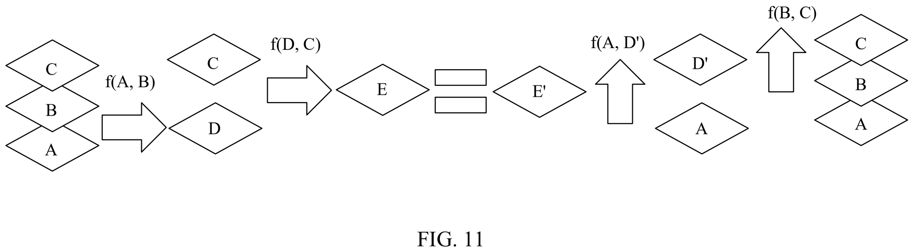

In some examples, for a blend algorithm of a layer, when a blend algorithm f(A, B) appears on three consecutive layers, if a calculation order of the blend algorithm is changed, and an obtained result remains unchanged, that is, f(f(A, B), C) = f(A, f(B, C)), the blend algorithm meets the associative condition. For example, as shown in FIG. 11, a layer list includes a layer A, a layer B, and a layer C. The three layers are the layer A, the layer B, and the layer C from bottom to top, and blend algorithms of the layer B and the layer C are both f. The electronic device synthesizes the layer A and the layer B, to obtain an intermediate image D, that is, the intermediate image D = f(A, B). Then, the electronic device synthesizes the layer C and the intermediate image D, to obtain a final layer synthesis result E = f(D, C) = f(f(A, B), C). If the electronic device changes a layer synthesis order, and synthesizes the layer B and the layer C, to obtain an intermediate image D', the intermediate image D' = f(B, C) may be obtained. Then, the electronic device synthesizes the layer A and the intermediate image D', to obtain a final layer synthesis result E' = f(A, D') = f(A, f(B, C)). If the result E is the same as the result E', it is considered that the blend algorithm f meets the associative condition.

In some examples, after determining that a plurality of layers meet the associative condition, the electronic device may apply for a temporary texture. Then, after generating the intermediate image, the electronic device may store the intermediate image into the temporary texture. In some examples, in a group pre-synthesis process, the electronic device may directly synthesize a plurality of to-be-pre-synthesized layers into the temporary texture.

For example, Table 2 shows some blend modes, in common blend modes, that meet the associative condition and corresponding blend algorithms. It should be understood that the blend algorithm, of the blend mode, that meets the associative condition is not limited to content shown in Table 2.

**Table 2**

| Blend mode | Blend algorithm |
|---|---|
| Normal mode | B |
| Multiply mode | A * B |
| Screen mode | 1 - (1 - A) * (1 - B) |

In some embodiments, after determining foreground layers located above the active layer, the electronic device may obtain one or more groups of foreground layers that meet the associative condition. The electronic device pre-synthesizes the one or more groups of foreground layers separately, to obtain one or more intermediate images. In addition, in a pre-synthesis process of a group of foreground layers, the electronic device keeps a layer order of the layer and the intermediate image unchanged. This can effectively reduce the quantity of foreground layers, and does not affect accuracy of a final layer synthesis result in a subsequent real-time layer synthesis process.

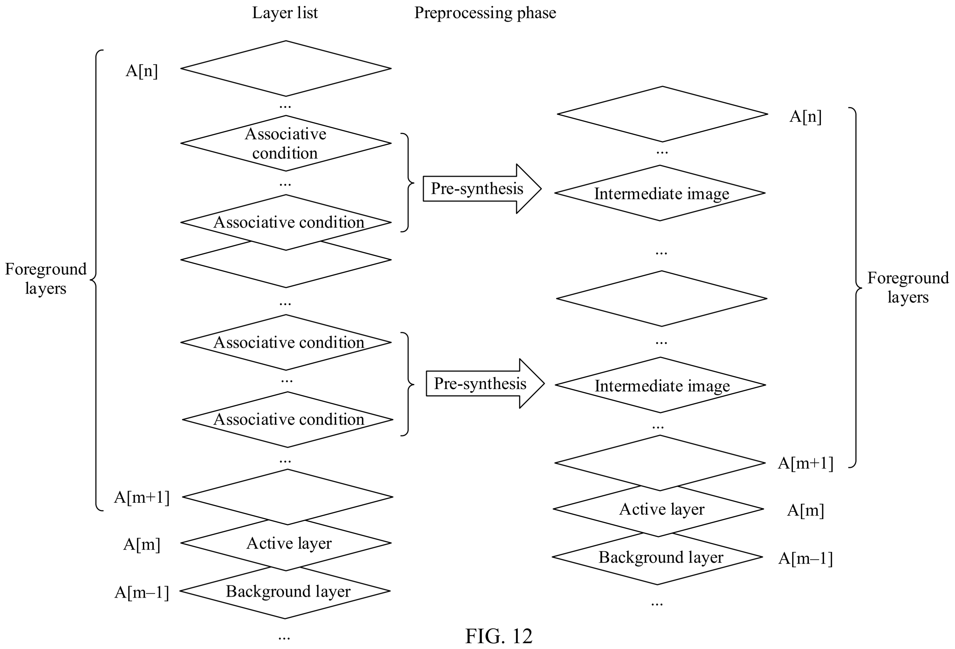

For example, as shown in FIG. 12, the electronic device traverses foreground layers A[m+1] to A[n]. If blend modes of several consecutive layers are the same and meet the associative condition, the several foreground layers may be classified into one group, and the group of foreground layers is synthesized into one intermediate image. In this way, the electronic device can obtain one or more intermediate images. The electronic device directly outputs layers, in the foreground layers, that do not belong to any group (or separately outputs these layers), and keeps a layer order of the layers unchanged.

In this way, the electronic device pre-synthesizes a group of foreground layers, to obtain the intermediate image. According to the method, a quantity of the foreground layers can be effectively reduced. Therefore, in a subsequent process of real-time layer synthesis, a quantity of layers participating in real-time synthesis is reduced, layer synthesis efficiency is improved, a painting latency is reduced, and user experience is improved.

In some scenes, an execution sequence of step S6031 to step S6033 is not limited in embodiments of this application. For example, the electronic device may change the layer order of the layers, then obtain the compound layer through synthesis, and pre-synthesize a group of foreground layers (that is, the electronic device sequentially performs step S6032, step S6031, and step S6033). For another example, the electronic device may change the layer order of the layers, then pre-synthesize a group of foreground layers, and obtain the compound layer through synthesis (that is, the electronic device sequentially performs step S6032, step S6033, and step S6031).

It should be understood that if the layer order of the layers is first changed, a plurality of layers (or masks) corresponding to the compound layer are combined together for changing of the layer order of the layers.

In some scenes, the electronic device may select to perform one or more of step S6031 to step S6033. For example, the electronic device reduces the quantity of foreground layers by changing the layer order of the layers (that is, the electronic device separately performs step S6032). For another example, the electronic device reduces the quantity of foreground layers by pre-synthesizing a group of foreground layers (that is, the electronic device separately performs step S6033). For another example, the electronic device reduces the quantity of foreground layers by changing the layer order of the layers and pre-synthesizing a group of foreground layers (that is, the electronic device performs step S6032 and step S6033). For another example, the electronic device reduces the quantity of foreground layers by changing the layer order of the layers and based on the compound layer (that is, the electronic device performs step S6031 and step S6032). For another example, the electronic device reduces the quantity of foreground layers through synthesis for obtaining a compound layer and pre-synthesis of a group of foreground layers (that is, the electronic device performs step S6031 and step S6033). For another example, the electronic device reduces the quantity of foreground layers through synthesis for obtaining a compound layer, changing of the layer order of the layers, and pre-synthesis of a group of foreground layers (that is, the electronic device performs step S6031, step S6032, and step S6033).

In other words, this embodiment of this application describes three foreground layer preprocessing methods by using step S6031 to step S6033. Execution sequences and execution quantities of the three preprocessing methods are not limited in embodiments of this application.

S604: The electronic device preprocesses the background layers.

In some embodiments, in a painting or image processing process, the user usually operates only content at an active layer, and does not change content at a background layer. In this case, after determining the active layer, the electronic device may pre-synthesize the background layers from bottom to up, to generate an intermediate image. It can be learned that the electronic device does not change the layer synthesis order in the pre-synthesis process. Therefore, in a subsequent real-time layer synthesis process, the electronic device synthesizes the intermediate image and the layer above the intermediate image from bottom to up, to ensure accuracy of a final synthesis result.

In some examples, the electronic device may apply for a temporary texture in a process of preprocessing the background layers. Then, after generating the intermediate image, the electronic device may store the intermediate image into the temporary texture. In some examples, in a process of preprocessing the background layers, the electronic device may directly synthesize the background layers into the temporary texture.

In some embodiments, the electronic device performs step S6032 to change the layer order of the layers and change, into background layers, some foreground layers that meet the commutative condition. Therefore, in the process of pre-synthesizing the background layers, the electronic device includes the layers whose layer order is changed in the pre-synthesized background layers.

For example, as shown in FIG. 10, after interchanging some foreground layers that meet the commutative condition with the active layer, the electronic device obtains a layer list. Background layers in the layer list include the layers that meet the commutative condition and whose layer order is changed. Then, the electronic device performs the background layer preprocessing phase, that is, synthesizes current background layers into an intermediate image from bottom to up.

It should be understood that if the electronic device pre-synthesizes a group of foreground layers to obtain an intermediate image 1 and then interchanges the intermediate image 1 with the active layer, the intermediate image 1 is changed into a background layer. In this case, in a process of generating the intermediate image by preprocessing the background layers, the electronic device pre-synthesizes the intermediate image 1 and another background layer, to generate an intermediate image 2.

In this way, the electronic device pre-synthesizes the background layers, to effectively reduce quantities of foreground layers and background layers that subsequently participate in real-time layer synthesis. This improves layer synthesis performance.

Therefore, the electronic device performs step S603 and step S604, to generate at least one of the intermediate image that meets the compound layer combination condition, the intermediate image that meets the associative condition, and the intermediate image corresponding to the background layers for participation of subsequent real-time layer synthesis.

S605: The electronic device performs real-time layer pre-synthesis.

In some embodiments, in a process in which the electronic device preprocesses the layer in the layer list, the electronic device may obtain, in response to an operation of the user, modification performed by the user on content at the active layer. In response to the modification operation of the user, the electronic device synthesizes the current active layer, an unprocessed layer, and the intermediate image in real time, to obtain a corresponding layer obtained through real-time synthesis for display. This provides real-time modification effect for the user.

It should be understood that, in the preprocessing process of step S602 to step S604, the layer list for real-time synthesis performed by the electronic device may not include the unprocessed layer, that is, all foreground layers and background layers are synthesized into corresponding intermediate images through preprocessing.

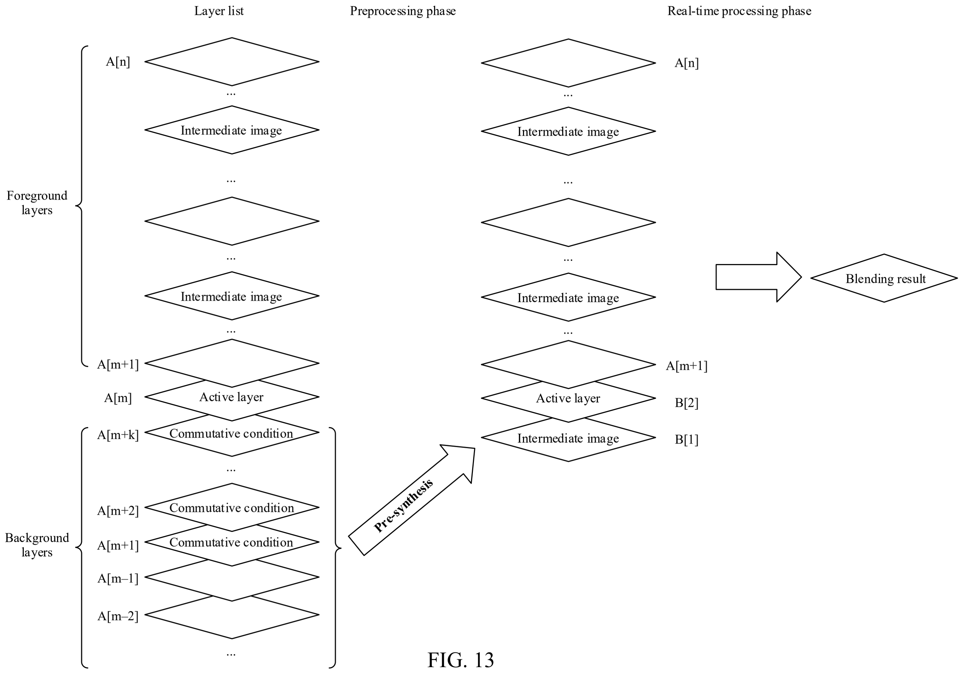

For example, as shown in FIG. 13, in the real-time processing phase, the electronic device obtains a layer list. The layer list includes an intermediate image B[1] corresponding to pre-synthesized background layers, an active layer B[2], and foreground layers A[m+1] to A[n]. The foreground layers A[m+1] to A[n] include intermediate images corresponding to groups of pre-synthesized background layers. The electronic device blends the layers and the intermediate images in the layer list from bottom to up, to obtain a final blending result.

In some examples, the electronic device may apply for a memory for storing a blending result. Then, the electronic device synthesizes, into the obtained memory from bottom to up, intermediate images corresponding to obtained background layers, an active layer, and layers or intermediate images corresponding to foreground layers, to obtain a target image through layer blending.

In some other examples, after pre-synthesizing background layers, the electronic device may obtain intermediate images corresponding to the background layers. Then, the electronic device synthesizes an active layer, layers or intermediate images corresponding to foreground layers, and the intermediate image corresponding to the background layers from bottom to up, to obtain a target image through layer blending.

In this way, according to at least one layer preprocessing method in synthesis for obtaining the compound layer, changing of the layer order of the layers, pre-synthesis of a group of foreground layers, background layer pre-synthesis, the electronic device reduces the quantity of layers participating in real-time layer synthesis, and effectively improves real-time synthesis performance. This reduces a latency, avoids frame freezing in display, and improves user experience.

The foregoing describes in detail the plurality of layer preprocessing implementations provided in embodiments of this application with reference to FIG. 6 to FIG. 13. The following describes a layer processing process by using several specific example scenes.

Scene 1: A layer list includes a background layer, an active layer, and a plurality of foreground layers.

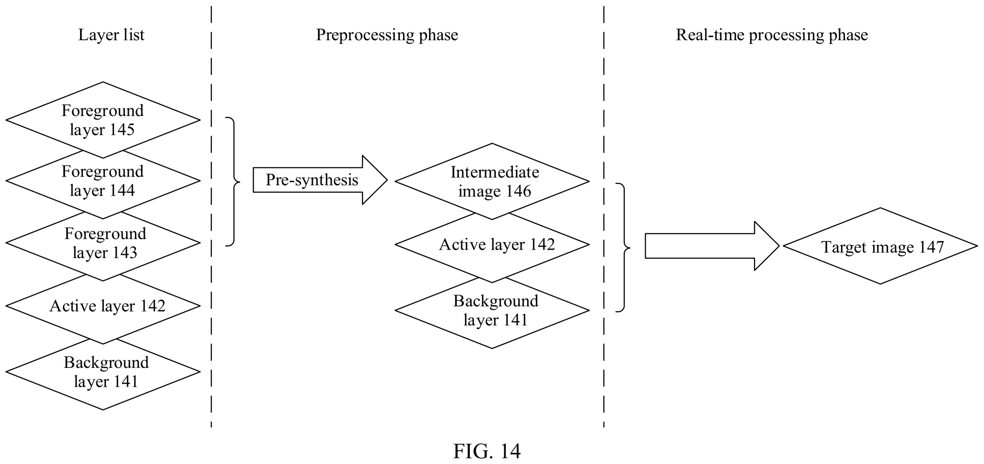

For example, as shown in FIG. 14, an electronic device obtains a background layer 141, an active layer 142, a foreground layer 143, a foreground layer 144, and a foreground layer 145 that are sequentially disposed. Then, the electronic device synthesizes the foreground layer 143, the foreground layer 144, and the foreground layer 145, to generate an intermediate image 146. Then, the electronic device synthesizes the background layer 141, the active layer 142, and the intermediate image 146, to generate a target image 147.

In this way, in a preprocessing phase, the electronic device pre-synthesizes the plurality of foreground layers, to effectively reduce a quantity of foreground layers participating in layer synthesis in a real-time processing phase, and improve real-time layer synthesis efficiency.

In some embodiments, the electronic device determines, based on blend modes of the foreground layer 143, the foreground layer 144, and the foreground layer 145, that the foreground layer 143, the foreground layer 144, and the foreground layer 145 meet an associative condition. Then, the electronic device synthesizes the foreground layer 143, the foreground layer 144, and the foreground layer 145, to generate the intermediate image 146.

In some examples, the associative condition indicates that a blending order of a plurality of adjacent layers is changeable.

For example, the associative condition specifically indicates that if the electronic device synthesizes the foreground layer 144 and the foreground layer 145, a first transition image is obtained; and then the first transition image and the foreground layer 143 are synthesized, to obtain a second transition image. If the electronic device synthesizes the foreground layer 143 and the foreground layer 144, a third transition image is obtained; and then the third transition image and the foreground layer 145 are synthesized, to obtain a fourth transition image. The second transition image is consistent with the fourth transition image.

For example, based on the associative condition shown in FIG. 11, after a layer order of layers is changed, synthesis results of the layers are the same. In this case, these layers meet the associative condition. For example, blend algorithms of these layers are the same and meet the associative condition.

In some embodiments, the electronic device determines, based on a blend mode of the intermediate image 146 and the active layer 142, that the intermediate image 146 and the active layer 142 do not meet a commutative condition, and maintains a layer order of the background layer 141, the active layer 142, and the intermediate image 146. The electronic device synthesizes the background layer 141, the active layer 142, and the intermediate image 146, to generate the target image 147. The commutative condition indicates that adjacent layers are interchangeable.

For example, as shown in FIG. 14, in a real-time processing phase, the electronic device maintains the layer order of the background layer 141, the active layer 142, and the intermediate image 146, and synthesizes the background layer 141, the active layer 142, and the intermediate image 146, to generate the target image 147.

In some other embodiments, the electronic device determines, based on a blend mode of the intermediate image 146 and the active layer 142, that the intermediate image 146 and the active layer 142 meet a commutative condition. The electronic device synthesizes the intermediate image 146 and the background layer 141, to generate an intermediate image 151. Then, the electronic device synthesizes the intermediate image 151 and the active layer 142, to generate the target image 147.

For example, the commutative condition specifically indicates: sequentially synthesizing the background layer 141, the active layer 142, and the intermediate image 146 from bottom to top, to obtain a fifth transition image; and sequentially synthesizing the background layer 141, the intermediate image 146, and the active layer 142 from bottom to top, to obtain a sixth transition image. The fifth transition image is consistent with the sixth transition image. For example, based on the commutative condition shown in FIG. 9, after the active layer 142 and the intermediate image 146 are interchanged, a final layer synthesis result is not affected. For example, blend algorithms of the active layer 142 and the intermediate image 146 meet the commutative condition.

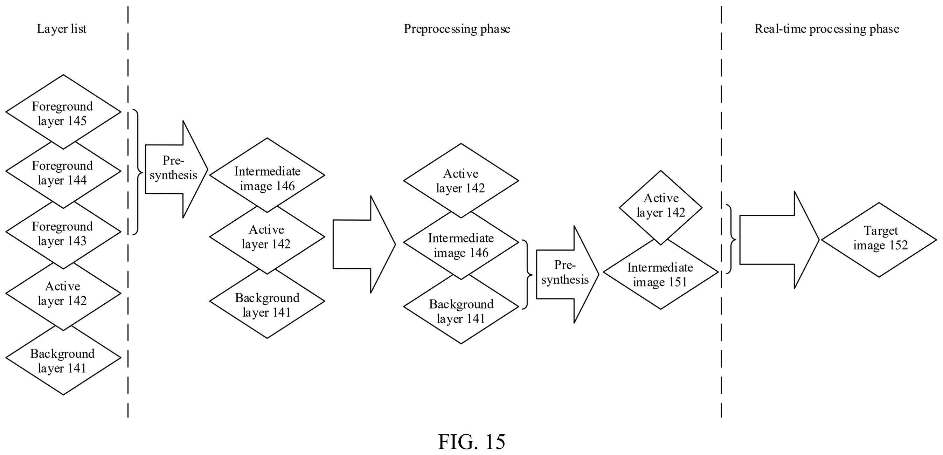

For example, as shown in FIG. 15, in a preprocessing phase, the electronic device pre-synthesizes the foreground layer 143, the foreground layer 144, and the foreground layer 145, to obtain the intermediate image 146, and then determines that the intermediate image 146 and the active layer 142 meet the commutative condition, for example, blend algorithms of the intermediate image 146 and the active layer 142 meet the commutative condition. In this case, the electronic device interchanges the active layer 142 with the intermediate image 146, that is, changes the intermediate image 146 into a background layer. Then, the electronic device may pre-synthesize the intermediate image 146 and the background layer 141, to generate the intermediate image 151. In this way, in the real-time processing phase, the electronic device only needs to synthesize the active layer 142 and the intermediate image 151, to generate the target image 152. This effectively reduces a quantity of layers that participate in real-time layer synthesis.

In some embodiments, there may alternatively be another foreground layer located above the foreground layer 145. However, the another foreground layer and the foreground layer 143, the foreground layer 144, and the foreground layer 145 do not meet the associative condition, and preprocessing cannot be performed. In this case, in a subsequent real-time processing phase, the another foreground layer also participates in real-time layer synthesis.

In some embodiments, in the current scene, the foreground layer 143, the foreground layer 144, and the foreground layer 145 are foreground layers adjacent to the active layer 142. After determining that the foreground layer 143 and the active layer 142 meet the commutative condition, the electronic device may first interchange the foreground layer 143 with the active layer 142. Then, after determining that the foreground layer 144 and the active layer 142 meet the commutative condition, the electronic device may interchange the foreground layer 144 with the active layer 142. Then, after determining that the foreground layer 145 and the active layer 142 meet the commutative condition, the electronic device may interchange the foreground layer 145 with the active layer 142. In other words, the electronic device may not pre-synthesize the foreground layers, but directly changes the foreground layer that meets the commutative condition into a background layer. It should be understood that there may alternatively be another foreground layer located above the foreground layer 145. However, the another foreground layer and the active layer 142 do not meet the commutative condition, and preprocessing cannot be performed. In this case, in a subsequent real-time processing phase, the another foreground layer also participates in real-time layer synthesis.

In some embodiments, as shown in FIG. 14, the electronic device determines that a pixel parameter of the active layer 142 changes, and resynthesizes the background layer 141, the active layer 142 whose pixel parameter changes, and the intermediate image 146, to generate another target image.

In this way, layers participating in real-time layer synthesis include only the background layer 141, the active layer 142, and the intermediate image 146, to effectively improve layer synthesis efficiency.

In some embodiments, as shown in FIG. 15, the electronic device determines that a pixel parameter of the active layer 142 changes, and resynthesizes the active layer 142 whose pixel parameter changes and the intermediate image 151, and generates another target image.

In this way, layers participating in real-time layer synthesis include only the active layer 142 and the intermediate image 151, to effectively improve layer synthesis efficiency.

Scene 2: A layer list includes a background layer set, an active layer, and a foreground layer.

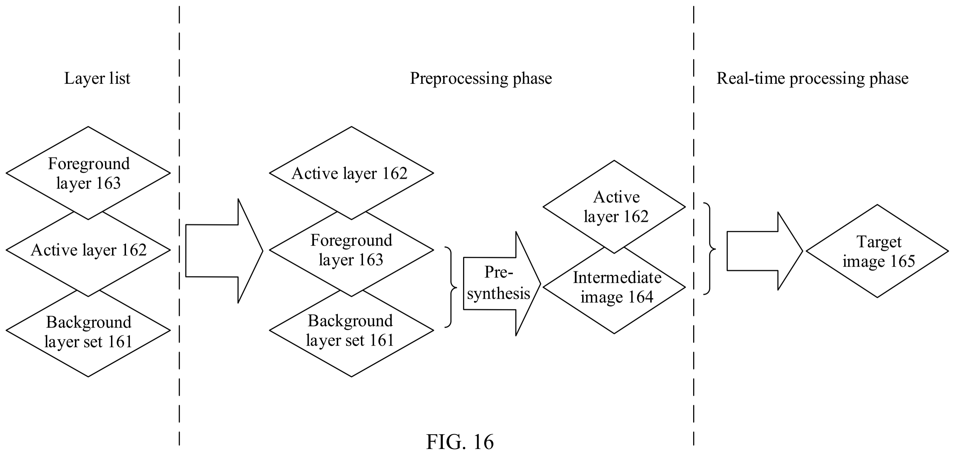

For example, as shown in FIG. 16, an electronic device obtains a background layer set 161, an active layer 162, a foreground layer 163 that are sequentially disposed. Then, the electronic device synthesizes the foreground layer 163 and the background layer set 161, to generate an intermediate image 164. Then, the electronic device synthesizes the active layer 162 and the intermediate image 164, to generate a target image 165.

In this way, in a preprocessing phase, the electronic device interchanges the foreground layer with the active layer, so that the foreground layer is changed into a background layer and participates in pre-synthesis with another background layer. This effectively reduces a quantity of foreground layers that subsequently participate in real-time layer synthesis, to improve real-time layer synthesis efficiency.

In some examples, the background layer set 161 includes a first background layer and a second background layer that are sequentially disposed. Alternatively, the background layer set 161 may include a single layer obtained by synthesizing the first background layer and the second background layer.

In this way, the electronic device may interchange the foreground layer with the active layer, and then pre-synthesize the background layers; or the electronic device may pre-synthesize the background layers, and then interchange the foreground layer with the active layer. Therefore, a layer preprocessing process is flexibly implemented.

In some examples, the foreground layer 163 is a compound layer, and the compound layer includes a mask layer and a foreground layer that are associated.

In this way, the compound layer in the foreground layer and the active layer may be interchanged, to effectively reduce a quantity of layers that participate in real-time layer synthesis.

In some embodiments, as shown in FIG. 16, in a preprocessing phase, the electronic device determines, based on a blend mode of the foreground layer 163 and the active layer 162, that the foreground layer 163 and the active layer 162 meet a commutative condition. Then, the electronic device synthesizes the foreground layer 163 and the background layer set 161, to generate the intermediate image 164.

In some examples, the commutative condition indicates that adjacent layers are interchangeable.

For example, the background layer set 161 includes a first background layer and a second background layer that are sequentially disposed. The commutative condition specifically indicates: sequentially synthesizing the first background layer, the second background layer, the active layer 162, and the foreground layer 163 from bottom to top, to obtain a first transition image; and sequentially synthesizing the first background layer, the second background layer, the foreground layer 163, and the active layer 162 from bottom to top, to obtain a second transition image, where the first transition image is consistent with the second transition image. For example, based on the commutative condition shown in FIG. 9, after the active layer 162 and the foreground layer 163 are interchanged, a final layer synthesis result is not affected. For example, blend algorithms of the active layer 162 and the foreground layer 163 meet the commutative condition.

In some embodiments, the electronic device determines that a pixel parameter of the active layer 162 changes, and resynthesizes the active layer 162 whose pixel parameter changes and the intermediate image 164, and generates another target image.

In this way, layers participating in real-time layer synthesis include only the active layer 162 and the intermediate image 164, to effectively improve layer synthesis efficiency.

In some embodiments, there may alternatively be another foreground layer located above the foreground layer 163. However, the another foreground layer and the active layer 162 do not meet the commutative condition, and preprocessing cannot be performed. In this case, in a subsequent real-time processing phase, the another foreground layer also participates in real-time layer synthesis.

Scene 3: A layer list includes a plurality of background layers, an active layer, and a foreground layer.

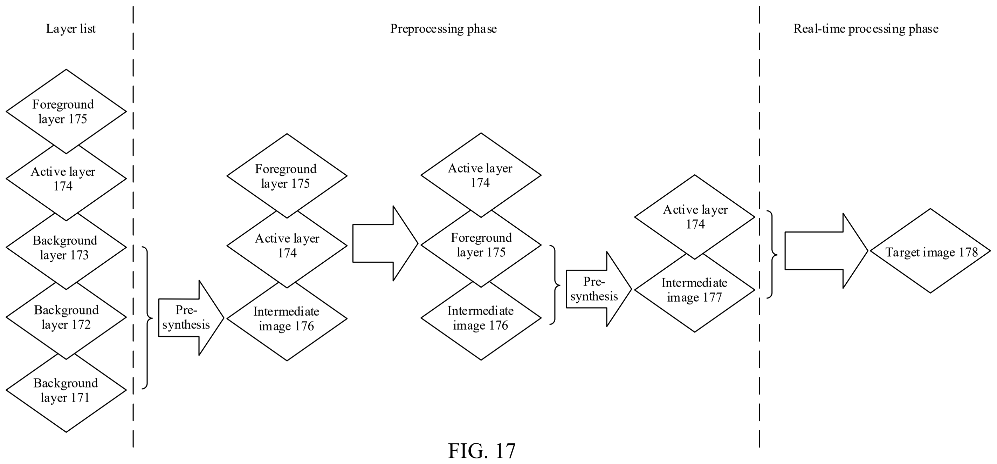

In some embodiments, as shown in FIG. 17, an electronic device obtains a background layer 171, a background layer 172, a background layer 173, an active layer 174, a foreground layer 175 that are sequentially disposed. Then, the electronic device synthesizes the background layer 171, the background layer 172, and the background layer 173, to generate an intermediate image 176. Then, the electronic device synthesizes the foreground layer 175 and the intermediate image 176, to generate an intermediate image 177. Then, the electronic device synthesizes the active layer 174 and the intermediate image 177, to generate a target image 178.

In this way, in a preprocessing phase, the electronic device pre-synthesizes the plurality of background layers. In addition, the electronic device interchanges the foreground layer with the active layer, so that the foreground layer is changed into a background layer and participates in pre-synthesis with another background layer. This effectively reduces a quantity of foreground layers that subsequently participate in real-time layer synthesis, to improve real-time layer synthesis efficiency.

In some embodiments, as shown in FIG. 17, in a preprocessing phase, the electronic device determines, based on a blend mode of the foreground layer 175 and the active layer 174, that the foreground layer 175 and the active layer 174 meet a commutative condition. Then, the electronic device synthesizes the foreground layer 175 and the intermediate image 176, to generate an intermediate image 177.

In some examples, the commutative condition indicates that adjacent layers are interchangeable.

For example, the commutative condition specifically indicates: sequentially synthesizing the intermediate image 176, the active layer 174, and the foreground layer 175 from bottom to top, to obtain a first transition image; and sequentially synthesizing the intermediate image 176, the foreground layer 175, and the active layer 174 from bottom to top, to obtain a second transition image. The first transition image is consistent with the second transition image. For example, based on the commutative condition shown in FIG. 9, after the active layer 174 and the foreground layer 175 are interchanged, a final layer synthesis result is not affected. For example, blend algorithms of the active layer 174 and the foreground layer 175 meet the commutative condition.

In some embodiments, as shown in FIG. 17, in the preprocessing phase, the electronic device determines, based on blend modes of the background layer 171, the background layer 172, and the background layer 173, that the background layer 171, the background layer 172, and the background layer 173 meet an associative condition. Then, the electronic device synthesizes the background layer 171, the background layer 172, and the background layer 173, to generate the intermediate image 176.

In some examples, the associative condition indicates that a blending order of a plurality of adjacent layers is changeable.

For example, the associative condition specifically indicates: synthesizing the background layer 171 and the background layer 172, to obtain a third transition image; and synthesizing the third transition image and the background layer 173, to obtain a fourth transition image; and synthesizing the background layer 172 and the background layer 173, to obtain a fifth transition image; and synthesizing the fifth transition image and the background layer 171, to obtain a sixth transition image, where the fourth transition image is consistent with the sixth transition image.

For example, based on the associative condition shown in FIG. 11, after a layer order of layers is changed, synthesis results of the layers are the same. In this case, these layers meet the associative condition. For example, blend algorithms of these layers are the same and meet the associative condition.

In some embodiments, there may alternatively be another foreground layer located above the foreground layer 175. However, the another foreground layer and the active layer 174 do not meet the commutative condition, and preprocessing cannot be performed. In this case, in a subsequent real-time processing phase, the another foreground layer also participates in real-time layer synthesis.

In some scenes, the electronic device displays a 4K canvas, and determines, in response to an operation of a user, a bottom layer as an active layer. In this case, a current layer list does not include a background layer, and includes only the active layer and a foreground layer located above the active layer. For example, a blend mode of layers is a multiply mode. As shown in Table 3, when a quantity of layers included in the layer list varies, if layer blending is performed based on an original solution in which all layers participate in real-time layer synthesis, a frame per second (frame per second, FPS), namely, a frame rate of the electronic device decreases as the quantity of layers increases. Consequently, frame freezing and an abnormality occur in display of the electronic device. In addition, when the quantity of layers is small, better display effect at a high frame rate cannot be obtained. However, if the electronic device preprocesses the layers, a minimum quantity of layers that participate in real-time synthesis may be two layers. In this case, the frame rate of the electronic device can be kept high, to implement good display effect at the high frame rate. This improves user experience.

**Table 3**

| Quantity of layers | Original solution | | This application | |
|---|---|---|---|---|
| | Quantity of layers synthesized in real time | Frame rate (FPS) | Quantity of layers synthesized in real time | Frame rate (FPS) |
| 25 | 25 | 60 | 2 | 120 |
| 50 | 50 | 31 | 2 | 120 |
| 75 | 75 | 21 | 2 | 120 |
| 100 | 100 | 16 | 2 | 120 |

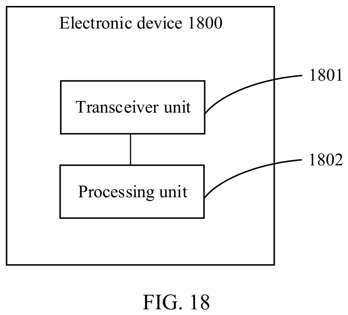

The foregoing describes in detail the layer synthesis method in embodiments of this application with reference to FIG. 6 to FIG. 17. The following describes in detail an electronic device provided in embodiments of this application with reference to FIG. 18.

In a possible design, FIG. 18 is a diagram of a structure of an electronic device according to an embodiment of this application. As shown in FIG. 18, an electronic device 1800 may include a transceiver unit 1801 and a processing unit 1802. The electronic device 1800 may be configured to implement functions of the electronic device in the foregoing method embodiments.

In some examples, the transceiver unit 1801 is configured to support the electronic device 1800 in performing S601 in FIG. 6.

In some examples, the processing unit 1802 is configured to support the electronic device 1800 in performing S602, S603, S604, and S605 in FIG. 6; and/or support the electronic device 1800 in performing S6031, S6032, and S6033 in FIG. 7.

The transceiver unit may include a receiving unit and a sending unit, may be implemented by a transceiver or a transceiver-related circuit component, and may be a transceiver or a transceiver module. Operations and/or functions of the units in the electronic device 1800 are separately intended to implement corresponding procedures of the layer synthesis method in the foregoing method embodiments. All related content of the steps in the foregoing method embodiments may be referenced to function descriptions of corresponding functional units. For brevity, details are not described herein again.

In some examples, the electronic device 1800 shown in FIG. 18 may further include a storage unit (not shown in FIG. 18), and the storage unit stores a program or instructions. When the transceiver unit 1801 and the processing unit 1802 execute the program or the instructions, the electronic device 1800 shown in FIG. 18 is enabled to perform the layer synthesis method in the foregoing method embodiments.

For technical effect of the electronic device 1800 shown in FIG. 18, refer to the technical effect of the layer synthesis method in the foregoing method embodiments. Details are not described herein again.

In addition to the form of the electronic device 1800, the technical solution provided in this application may also be a functional unit or a chip in the electronic device, or an apparatus used in combination with the electronic device.

An embodiment of this application further provides a chip system, including a processor, the processor is coupled to a memory, and the memory is configured to store a program or instructions. When the program or the instructions is/are executed by the processor, the chip system is enabled to implement the method according to any one of the foregoing method embodiments.

In some examples, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

In some examples, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed via an integrated logic circuit of hardware in the processor or instructions in a form of software. The steps of the method disclosed with reference to embodiments of this application may be directly performed and completed by a hardware processor, or may be performed and completed by using a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the layer synthesis method in the foregoing embodiments.

An embodiment of this application further provides a computer program product. When the computer program product runs on a computer, the computer is enabled to perform the foregoing related steps, to implement the layer synthesis method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is enabled to perform the layer synthesis method in the foregoing method embodiments.

The apparatus, the computer-readable storage medium, the computer program product, or the chip provided in embodiments of this application is configured to perform the corresponding method provided above. Therefore, for beneficial effect that can be achieved, refer to beneficial effect in the corresponding method provided above, and details are not described herein again.

Methods or algorithm steps described in combination with the content disclosed in embodiments of this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to the processor, to enable the processor to read information from the storage medium and write the information into the storage medium. Certainly, the storage medium may be a component of the processor. The processor and the storage medium may be located in an application-specific integrated circuit (application-specific integrated circuit, ASIC).

The description of the foregoing implementations allows a person skilled in the art to clearly understand that, for the purpose of convenient and brief description, division into the foregoing functional modules is used as merely an example for description. During actual application, the foregoing functions can be allocated to different functional modules for implementation based on a requirement. That is, an internal structure of the apparatus is divided into different functional modules to implement all or some of the functions described above. For a detailed working process of the foregoing system, apparatus, and unit, refer to a corresponding process in the method embodiments, and details are not described herein again.

In the several embodiments provided in this application, it should be understood that the disclosed method may be implemented in other manners. The apparatus embodiments described above are merely examples. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

The computer-readable storage medium includes but is not limited to any one of the following: any medium that can store program code, for example, a USB flash drive, a removable hard disk, a read-only memory (read-only memory, ROM), a random access memory (random access memory, RAM), a magnetic disk, or an optical disc.

The foregoing description is merely a specific implementation of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A layer synthesis method, applied to an electronic device, wherein the method comprises:
obtaining a background layer, an active layer, a first foreground layer, a second foreground layer, and a third foreground layer that are sequentially disposed;
synthesizing the first foreground layer, the second foreground layer, and the third foreground layer, to generate a first intermediate image; and
synthesizing the background layer, the active layer, and the first intermediate image, to generate a first target image.

2. The method according to claim 1, wherein before the synthesizing the first foreground layer, the second foreground layer, and the third foreground layer, to generate the first intermediate image, the method further comprises:
determining, based on a blend mode of the first foreground layer, the second foreground layer, and the third foreground layer, that the first foreground layer, the second foreground layer, and the third foreground layer meet an associative condition, wherein the associative condition indicates that a blending order of a plurality of adjacent layers is changeable.

3. The method according to claim 2, wherein the method further comprises:
in response to an operation of a user, interchanging the second foreground layer with the third foreground layer without changing the active layer; and
synthesizing the first foreground layer, the third foreground layer, and the second foreground layer, to obtain a second intermediate image, wherein the second intermediate image is consistent with the first intermediate image.

4. The method according to claim 2 or 3, wherein the associative condition specifically indicates:
synthesizing the second foreground layer and the third foreground layer, to obtain a first transition image; and synthesizing the first transition image and the first foreground layer, to obtain the second transition image; and
synthesizing the first foreground layer and the second foreground layer, to obtain a third transition image; and synthesizing the third transition image and the third foreground layer, to obtain a fourth transition image, wherein
the second transition image is consistent with the fourth transition image.

5. The method according to any one of claims 1 to 4, wherein the generating the first target image comprises:
determining, based on a blend mode of the first intermediate image and the active layer, that the first intermediate image and the active layer do not meet a commutative condition, and maintaining a layer order of the background layer, the active layer, and the first intermediate image, wherein the commutative condition indicates that adjacent layers are interchangeable; and
synthesizing the background layer, the active layer, and the first intermediate image, to generate the first target image.

6. The method according to any one of claims 1 to 4, wherein the generating the first target image comprises:
determining, based on a blend mode of the first intermediate image and the active layer, that the first intermediate image and the active layer meet a commutative condition, wherein the commutative condition indicates that adjacent layers are interchangeable;
synthesizing the first intermediate image and the background layer, to generate the second intermediate image; and
synthesizing the second intermediate image and the active layer, to generate the first target image.

7. The method according to claim 5 or 6, wherein the commutative condition specifically indicates:
sequentially synthesizing the background layer, the active layer, and the first intermediate image from bottom to top, to obtain a fifth transition image; and
sequentially synthesizing the background layer, the first intermediate image, and the active layer from bottom to top, to obtain a sixth transition image, wherein
the fifth transition image is consistent with the sixth transition image.

8. A layer synthesis method, applied to an electronic device, wherein the method comprises:
obtaining a background layer set, an active layer, and a first foreground layer that are sequentially disposed;
synthesizing the first foreground layer and the background layer set, to generate a first intermediate image; and
synthesizing the active layer and the first intermediate image, to generate a first target image.

9. The method according to claim 8, wherein the background layer set comprises a first background layer and a second background layer that are sequentially disposed.

10. The method according to claim 9, wherein before the synthesizing the first foreground layer and the background layer set, to generate the first intermediate image, the method further comprises:
determining, based on a blend mode of the first foreground layer and the active layer, that the first foreground layer and the active layer meet a commutative condition, wherein the commutative condition indicates that adjacent layers are interchangeable.

11. The method according to claim 10, wherein the commutative condition specifically indicates:
sequentially synthesizing the first background layer, the second background layer, the active layer, and the first foreground layer from bottom to top, to obtain a first transition image; and
sequentially synthesizing the first background layer, the second background layer, the first foreground layer, and the active layer from bottom to top, to obtain a second transition image, wherein
the first transition image is consistent with the second transition image.

12. The method according to any one of claims 8 to 11, wherein the first foreground layer is a compound layer, and the compound layer comprises a mask layer and a foreground layer that are associated.

13. The method according to any one of claims 8 to 12, wherein the method further comprises:
determining that a pixel parameter of the active layer changes, and resynthesizing the active layer whose pixel parameter changes and the first intermediate image, to generate a second target image.

14. A layer synthesis method, applied to an electronic device, wherein the method comprises:
obtaining a first background layer, a second background layer, a third background layer, an active layer, and a first foreground layer that are sequentially disposed;
synthesizing the first background layer, the second background layer, and the third background layer, to generate a first intermediate image;
synthesizing the first foreground layer and the first intermediate image, to generate a second intermediate image; and
synthesizing the active layer and the second intermediate image, to generate a first target image.

15. The method according to claim 14, wherein before the synthesizing the first foreground layer and the first intermediate image, to generate the second intermediate image, the method further comprises:
determining, based on a blend mode of the first foreground layer and the active layer, that the first foreground layer and the active layer meet a commutative condition, wherein the commutative condition indicates that adjacent layers are interchangeable.

16. The method according to claim 15, wherein the commutative condition specifically indicates:
sequentially synthesizing the first intermediate image, the active layer, and the first foreground layer from bottom to top, to obtain a first transition image; and
sequentially synthesizing the first intermediate image, the first foreground layer, and the active layer from bottom to top, to obtain a second transition image, wherein
the first transition image is consistent with the second transition image.

17. The method according to any one of claims 14 to 16, wherein before the synthesizing the first background layer, the second background layer, and the third background layer, to generate the first intermediate image, the method further comprises:
determining, based on a blend mode of the first background layer, the second background layer, and the third background layer, that the first background layer, the second background layer, and the third background layer meet an associative condition, wherein the associative condition indicates that a blending order of a plurality of adjacent layers is changeable.

18. The method according to claim 17, wherein the associative condition specifically indicates:
synthesizing the first background layer and the second background layer, to obtain a third transition image; and synthesizing the third transition image and the third background layer, to obtain a fourth transition image; and
synthesizing the second background layer and the third background layer, to obtain a fifth transition image; and synthesizing the fifth transition image and the first background layer, to obtain a sixth transition image, wherein
the fourth transition image is consistent with the sixth transition image.

19. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the method according to any one of claims 1 to 7, or the method according to any one of claims 8 to 13, or the method according to any one of claims 14 to 18.

20. A computer-readable storage medium, wherein the computer-readable storage medium comprises a computer program, when the computer program is run on an electronic device, the electronic device is enabled to perform the method according to any one of claims 1 to 7, or the method according to any one of claims 8 to 13, or the method according to any one of claims 14 to 18.
